(19)

Europäisches
Patentamt
European
Patent Office
Office européen
des brevets

(11) **EP 1 930 233 B1**

(12) **EUROPEAN PATENT SPECIFICATION**

(45) Date of publication and mention
of the grant of the patent:
**05.08.2015 Bulletin 2015/32**

(51) Int Cl.:
***B62K 25/04*** *(2006.01)*   ***B60G 17/016*** *(2006.01)*

(21) Application number: **07254695.5**

(22) Date of filing: **04.12.2007**

(54) **Suspension controller and vehicle**

Aufhängungssteuerung und Fahrzeuge

Contrôleur de suspension et véhicule

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **05.12.2006 JP 2006327855**

(43) Date of publication of application:
**11.06.2008 Bulletin 2008/24**

(73) Proprietor: **Yamaha Hatsudoki Kabushiki Kaisha
Iwata-shi, Shizuoka 438-8501 (JP)**

(72) Inventor: **Terui, Toshiyasu c/o Yamaha Hatsudoki
K.K.
Iwata-shi, Shizuoka-ken 438-8501 (JP)**

(74) Representative: **Moreland, David et al
Marks & Clerk LLP
Aurora
120 Bothwell Street
Glasgow
G2 7JS (GB)**

(56) References cited:
**EP-A2- 1 391 332    DE-A1- 3 930 966
JP-A- 6 297 930      US-A1- 2002 103 587
US-A1- 2002 138 186**

**Description**

FIELD OF THE INVENTION

The present invention relates to a suspension controller and a vehicle.

BACKGROUND OF THE INVENTION

Conventionally, it is known that a vehicle can suppress a squat (a downward deflection) of the vehicle body during acceleration by controlling a damping force of a suspension system (for example, refer to JP-B Hei 2-14206). Such a vehicle has a facility for detecting that the opening speed of a throttle valve is equal to or higher than a predefined value and that the throttle valve is being opened suddenly. When the throttle valve is opened suddenly, the damping force of the suspension system is changed to suppress the squat.

However, when the throttle valve is opened suddenly, if the control for suppressing the squat described above is executed regardless of the driving condition of the vehicle, a problem may occur as described below. The amount of the deflection of a squat varies according to the driving condition of the vehicle. Therefore, if the control is always executed in the same manner, the squat is not suppressed optimally. Moreover, the behavior of the vehicle may be unstabilized, and the ride comfort may deteriorate.

EP1391332 describes an electronically controlled suspension apparatus according to the preamble of claims 1 and 13, that is configured to provide anti-squat control. The apparatus comprises a throttle position sensor for producing an electrical signal that is representative of a degree or amount of throttle opening, a vehicle speed sensor for producing a speed signal that is representative of the speed of the vehicle and an electronic control unit for controlling front and rear dampers. The control unit is provided with a differentiation block, which differentiates the throttle position signal from the throttle position sensor.

The control unit further comprises a determination block that compares an increasing differential value of the throttle position signal with a preset reference value RV3 and a decreasing differential value of the throttle position signal with a preset reference value RV4.

If the determination block determines that the throttle position signal rises to exceed the reference value RV3, the determination block transmits an anti-squat signal to the damper control to operate the damper in an anti-squat mode, which comprises setting the front dampers such that they are hard on rebound and soft on compression and maintains this setting for a time period T3 and sets the rear dampers such that they are soft on rebound and hard on compression, or alternatively, that both front and rear dampers are set to a hard setting.

The determination block also determines when the differential value of the throttle position signal decreases to be less than the second reference value RV4. In this case, an anti-dive mode is entered whereby the front dampers are set to be soft on rebound and hard on compression and the rear dampers are set to be hard on rebound and soft on compression or alternatively both the front and rear dampers are set to be hard on compression and rebound.

US2002/0138186 describes a controller for an adaptive electronic suspension system that senses a vehicle speed using signal that is output from a vehicle speed sensor, and detects an opening amount of a throttle valve mounted on an intake manifold using a signal output from a throttle position sensor (TPS). The controller differentiates the opening amount of the throttle valve obtained from the throttle position sensor (e.g. to obtain a rate of change of the throttle opening). After that, the electronic controller computes a squirt variable Q from the differentiated value of the opening amount of the throttle valve and the vehicle speed (W) using the formula:

$$Q = a\ coefficient \times a\ sensor\ differentiated\ amount \times W$$

Then the electronic controller 10 determines if the squirt variable Q is larger or smaller than a predetermined value Cr1. If the squirt variable Q is larger than the predetermined value Cr1, the electronic controller 10 drives a front and rear actuators 7, 8 so that a damping force of a wheel damper is converted into a medium mode. On the other hand, if the squat variable Q is smaller than the predetermined value then the damping force of the wheel damper is converted into a soft mode.

An object of an embodiment of the present invention, in view of such situation described above, is to provide a suspension controller for improving ride comfort and driving stability and a vehicle provided with such a suspension controller.

SUMMARY OF THE INVENTION

The suspension controller according to a first aspect of the invention is adapted to be mounted on a vehicle having:

a throttle valve for adjusting the engine air intake;
a throttle setting detection apparatus;
a vehicle speed sensor for detecting vehicle speed;
a front wheel;
a rear wheel;
a front wheel suspension system; and
a rear wheel suspension system;
the suspension controller for controlling damping forces on expansion and on contraction of the front wheel suspension system and the rear wheel suspension system, the controller comprising:

an opening speed determination device for determining an opening speed of the throttle on the basis of an output of the throttle setting detection apparatus;
a squat suppression device for increasing either or both of the damping force on expansion of the front wheel suspension system and the damping force on contraction of the rear wheel suspension system when the opening speed determined by the opening speed determination device is equal to or higher than a first threshold; and
a first threshold setting device for setting the first threshold corresponding to the vehicle speed detected by the vehicle speed sensor, the vehicle speed being zero or more.

The suspension controller according to a second aspect of the invention is adapted to be mounted on a vehicle having:

an engine;
a throttle valve for adjusting the engine air intake;
a throttle setting detection apparatus;
a vehicle speed sensor for detecting a vehicle speed;
a front wheel;
a rear wheel;
a front wheel suspension system; and
a rear wheel suspension system;
the suspension controller for controlling damping forces on expansion and on contraction of the front wheel suspension system and in the rear wheel suspension system, the controller comprising:

a shutting speed determination device for determining a shutting speed of the throttle valve on the basis of an output of the throttle setting detection apparatus;
a diving suppression device for increasing either or both of the damping force on contraction of the front wheel suspension system and the damping force on expansion of the rear wheel suspension system when the shutting speed determined by the shutting speed determination device is equal to or higher than a third threshold; and
a third threshold setting device for setting the third threshold corresponding to the vehicle speed detected by the vehicle speed sensor, the vehicle speed being zero or more.

The suspension controller according to a third aspect of the invention is mounted on a vehicle having an engine, a throttle valve for adjusting the amount of an air intake of the engine, a throttle angle detection apparatus for detecting an angle of the throttle valve, a vehicle speed sensor for detecting a vehicle speed, a front wheel, a rear wheel, a front wheel side suspension system for absorbing an impact on the front wheel, and a rear wheel side suspension system for absorbing the impact on the rear wheel in order to control each of damping forces on an expansion side and on a contraction side in the front wheel side suspension system and in the rear wheel side suspension system, having an opening speed calculation device for calculating an opening speed of the throttle valve on the basis of a detection result of the throttle angle detection apparatus, a squat suppression device for setting either or both of the damping force on the expansion side of the front wheel side suspension system and the damping force on the contraction side of the rear wheel suspension device higher than the damping force of a time when the opening speed is less than a first threshold, and a first threshold setting device for setting the first threshold corresponding to the vehicle speed detected by the vehicle speed sensor.

With the suspension controller, when the opening speed of the throttle valve becomes equal to or higher than the first threshold, the squat suppression control for suppressing a squat of the vehicle is executed. Either or both of the damping force on the expansion side of the front wheel side suspension system and the damping force on the contraction side of the rear wheel side suspension system are set high in the squat suppression control. The first threshold is set corresponding to the vehicle speed in the suspension controller. In this constitution, the opening speed of the throttle valve while the squat suppression control is executed can be set according to the vehicle speed. As a result, it is possible to improve ride comfort and driving stability.

The suspension controller according to a fourth aspect of the invention is mounted on a vehicle having an engine, a throttle valve for adjusting the amount of an air intake of the engine, a throttle angle detection apparatus for detecting the angle of the throttle valve, a vehicle speed sensor for detecting a vehicle speed, a front wheel, a rear wheel, a front wheel side suspension system for absorbing an impact on the front wheel, and a rear wheel side suspension system for absorbing an impact on the rear wheel in order to control each of damping forces on an expansion side and on a contraction side in the front wheel side suspension system and in the rear wheel side suspension system, having a shutting speed calculation device for calculating a shutting speed of the throttle valve on the basis of a detection result of the throttle angle detection apparatus, a diving suppression device for setting either or both of the damping force on the contraction side of the front wheel side suspension system and the damping force on the expansion side of the rear wheel suspension device higher than the damping force of a time when the shutting speed is less than a third threshold while the shutting speed calculated by the shutting speed calculation device is equal to or higher than the third threshold, and a third threshold setting device for setting the third threshold corresponding to the vehicle speed detected by the vehicle speed sensor.

When an accelerator is suddenly returned and the throttle valve is suddenly shut during driving, a diving occurs and the vehicle body declines forward. With the suspension controller described above, when a shutting speed of the throttle valve becomes equal to or higher than the third threshold, the diving suppression control is executed to suppress the diving described above. Either or both of the damping force on the contraction side of the front wheel side suspension system and the damping force on the expansion side of the rear wheel side suspension system are set high in the diving suppression control. The third threshold is set corresponding to the vehicle speed in the suspension controller. In this constitution, when the diving suppression control is executed, the shutting speed of the throttle valve can be set according to the vehicle speed. As a result, it is possible to improve ride comfort and driving stability.

According to a fifth aspect of the invention there is provided a method of controlling the front wheel suspension system and the rear wheel suspension system of a vehicle, the method comprising increasing one or both of the damping force on expansion of the front wheel suspension system and the damping force on contraction of the rear wheel suspension system when the opening speed of the vehicle engine throttle is equal to or higher than a first threshold; and setting the first threshold corresponding to the vehicle speed.

According to a sixth aspect of the invention there is provided a method of controlling the front wheel suspension system and the rear wheel suspension system of a vehicle, the method comprising increasing one or both of the damping force on contraction of the front wheel suspension system and the damping force on expansion of the rear wheel suspension system when the shutting speed of the vehicle engine throttle is equal to or higher than a third threshold; and setting the third threshold corresponding to the vehicle speed.

According to an aspect of the present invention, squat and diving may be suppressed optimally. Moreover, it is possible to improve ride comfort and driving stability.

BRIEF DESCRIPTION OF THE DRAWINGS

An embodiment of the present invention will be described hereinafter with reference to accompanying drawings, in which:

FIG. 1 is a side view of a two-wheel motor vehicle according to the embodiment.
FIG. 2 is a drawing of the constitution of the driveline system of the motorcycle.
FIG. 3 is a drawing for illustrating a simplified view of the constitution of a hydraulic buffer.
FIG. 4 is a block diagram illustrating a simplified view of the constitution of a suspension controller.
FIG. 5 is a flow chart illustrating the flow of the damping force control processing.
FIG. 6 is a flow chart illustrating the flow of the squat suppression processing.
FIG. 7 is a flow chart illustrating the flow of the squat suppression processing.
FIG. 8 is a drawing for describing a squat and squat suppression.
FIG. 9 is a drawing illustrating an opening speed threshold setting table.
FIG. 10 is a drawing illustrating an opening speed threshold setting table.
FIG. 11 is a drawing illustrating the characteristic of a plurality of the first damping force maps.
FIG. 12 is a flow chart illustrating the flow of the diving suppression processing.
FIG. 13 is a flow chart illustrating the flow of the diving suppression processing.

FIG. 14 is a drawing for describing a diving and a diving suppression.

FIG. 15 is a drawing illustrating a shutting speed threshold setting table.

FIG. 16 is a drawing illustrating the characteristic of a plurality of the second damping force maps.

DETAILED DESCRIPTION OF THE DRAWINGS

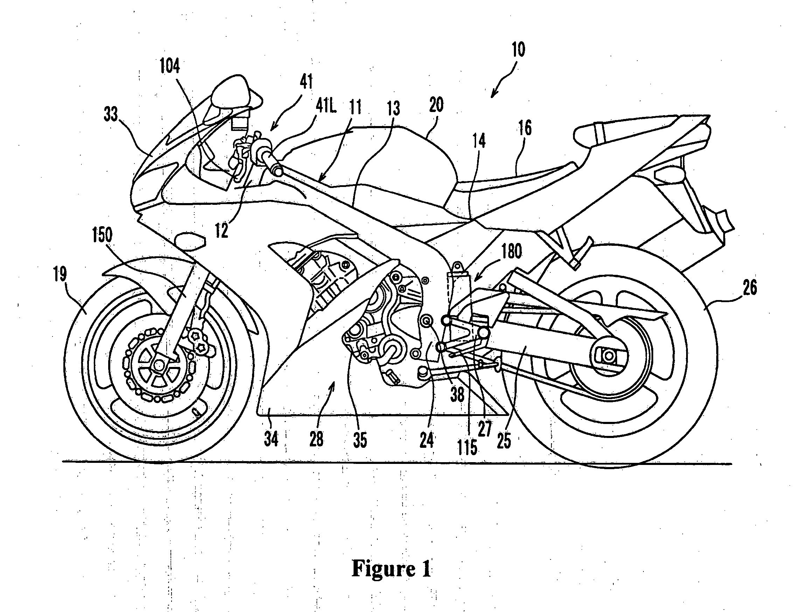

As shown in FIG. 1, a vehicle according to an embodiment of the present invention is a motorcycle 10. The motorcycle 10 has a body frame 11 forming a framework and a seat 16 on which a rider sits. The rider seated on the seat 16 drives the vehicle, straddling the body frame 11. The type of vehicle of the present invention is not limited to the type shown in FIG. 1, and a so-called moped type vehicle can be used. The maximum speed, the displacement, the size of the vehicle, and so forth are not limited either. The vehicle is not limited to a motorcycle but can be another vehicle such as a four-wheel buggy.

In the following description, horizontal positions such as the front, the rear, the left, and the right refer to positions viewed by the rider sitting on the seat 16. The body frame 11 has a steering head pipe 12, a main frame 13 extending downward and rearward from the steering head pipe 12, and seat rails 14 on the left and right sides extending upward and rearward from a middle part of the main frame 13.

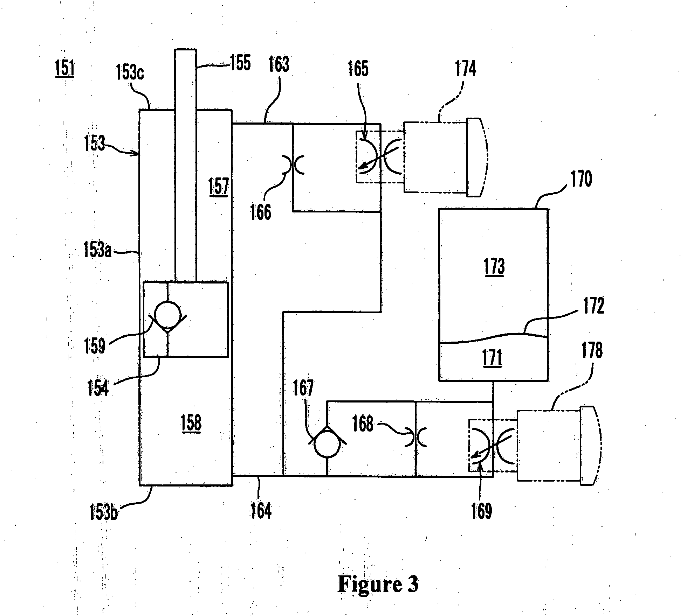

A front wheel 19 is supported by the steering head pipe 12 via a front wheel suspension system 150. The front wheel suspension system 150 is a system for absorbing an impact applied to the front wheel 19 from a road or the like. The front wheel suspension system 150 has a hydraulic buffer 151 (refer to FIG. 3) and a contraction coil spring (not shown in the drawing) . This contraction coil spring absorbs an impact on the front wheel 19. The hydraulic buffer 151 generates the damping force on expansion and on contraction of the front wheel side suspension system 150.

A fuel tank 20 and the seat 16 are supported on the seat rails 14. The seat 16 extends behind the fuel tank 20 in the direction of the rear ends of the seat rails 14.

A pair of rear arm brackets 24 on the left and right sides are provided to the rear end of the main frame 13. The rear arm brackets 24 and others provided to the main frame 13 are parts of the body frame 11.

The rear arm brackets 24 extend downward from the rear end of the main frame 13. A pivot shaft 38 is provided on the rear arm brackets 24. The front end of a rear arm 25 is swingably supported by the pivot shaft 38. A rear wheel 26 is supported by the rear end of the rear arm 25. The rear arm 25 is supported by the body frame 11 via a link mechanism 27 and a rear wheel suspension system 180.

The rear wheel suspension system 180 is a system for absorbing an impact applied to the rear wheel 26 from a road or the like. The rear wheel suspension system 180 has the hydraulic buffer 151 (refer to FIG. 3) and a contraction coil spring (not shown in the drawing) . This contraction coil spring absorbs an impact on the rear wheel 26. The hydraulic buffer 151 generates the damping force on expansion and on contraction of the rear wheel side suspension system 180.

An engine unit 28 for driving the rear wheel 26 is supported by the body frame 11. A crankcase 35 is suspendedly supported by the main frame 13. In the embodiment, the engine unit 28 has a gasoline engine (not shown in the drawing). However, the engine of the engine unit 28 is not limited to an internal combustion engine such as a gasoline engine but can be an electric or other motor. The engine can be an engine provided by a combination of a gasoline engine and an electric motor. Accordingly, references herein to throttle valves, throttle valve angles, throttle opening settings and speeds and the like are intended to encompass the corresponding controls provided on an engine or motor which does not include a throttle or throttle valve, includes an alternative form of engine or intake control, or includes an alternate engine or motor speed control mechanism.

The motorcycle 10 has a front cowl 33 and leg shields 34 on the left and right sides. The leg shields 34 are members for covering front sides of the feet of the rider.

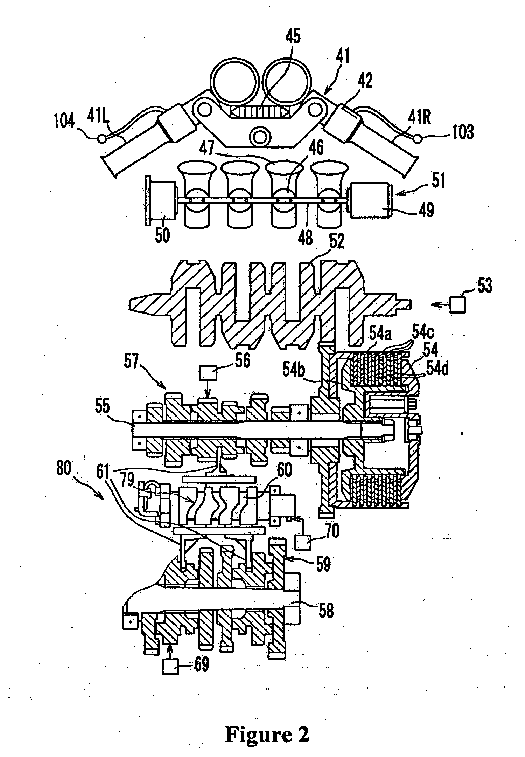

A brake pedal is provided to the lower part on the right side of the motorcycle 10 though not shown in the drawing. The brake pedal is for stopping the rear wheel 26. On the other hand, the front wheel 19 is stopped by operating a brake lever 103 (refer to FIG. 2) provided in the vicinity of a right grip 41R (an accelerator grip) on a handlebar 41. A clutch lever 104 is provided in the vicinity of a left grip 41L on the handlebar 41. A clutch 54 (refer to FIG. 2) is disengaged by operating the clutch lever 104. In addition, a shift pedal 115 is provided to the lower part on the left side of the motorcycle 10. A gear of a transmission 80 (refer to FIG. 2) is shifted by operating the shift pedal 115.

FIG. 2 illustrates the constitution of the driveline system of the motorcycle 10 shown in FIG. 1. The right grip 41R on the handlebar 41 constitutes the accelerator grip. An accelerator input sensor 42 is mounted on the accelerator grip. The accelerator input sensor 42 detects the amount of the operation on the right grip 41R (the amount of the operation of the accelerator) by the rider. An indicator 45 for displaying a current gear position is provided to the middle part of the handlebar 41. A shift position can be changed to a higher position or to a lower position between the neutral and the sixth gear, the highest gear, by an operation of the shift pedal 115 (refer to FIG. 1) in this embodiment.

A throttle valve 46 is mounted on a throttle 47 constituting an intake air passage. A throttle drive actuator 49 is provided to the right end of a valve stem 48 of the throttle valve 46, and a throttle angle sensor 50 is provided to the left end. The throttle angle sensor 50 detects an angle of the throttle valve 46 (a throttle angle). This throttle angle sensor 50 is one embodiment of the throttle setting detection apparatus of the present invention. It is also within the scope of the present invention that the throttle angle is indirectly detected by the amount of operation of the accelerator detected with the accelerator input sensor 42. In a case like this, the accelerator input sensor 42 functions as the throttle setting detection apparatus of the present invention. An electronically controlled throttle device 51 is constituted with the right grip 41R as the accelerator grip, the throttle 47, the throttle drive actuator 49, and the throttle angle sensor 50.

An engine speed sensor 53 is provided on the right side of the right end of a crankshaft 52 of the engine unit 28. The crankshaft 52 is connected to a main shaft 55 via the clutch 54 of a wet multiple disc type. The clutch 54 has a clutch housing 54a and a clutch boss 54b. A multiplicity of friction plates 54c is mounted in the clutch housing 54a. A multiplicity of clutch plates 54d is mounted on the clutch boss 54b. Each of the clutch plates 54d is disposed between adjacent friction plates 54c. The distances between the friction plates 54c and the clutch plates 54d vary by operating the clutch lever 104, so that the clutch 54 is engaged or disengaged. A multiplicity of shift gears 57 for a multiplicity of speeds (six speeds in FIG. 2) is mounted on the main shaft 55, and a main shaft rotational speed sensor 56 is provided. Each of the shift gears 57 mounted on the main shaft 55 meshes with each of shift gears 59 mounted on a drive shaft 58. The drive shaft 58 is disposed in parallel with the main shaft 55. The shift gears 57 and the shift gears 59 are separately illustrated in FIG. 2 for convenience of description.

The shift gears 57 and the shift gears 59 are mounted so that gears other than a selected gear rotate freely in relation to either or both of the main shaft 55 and the drive shaft 58. Accordingly, the drive force from the main shaft 55 to the drive shaft 58 is transmitted only via one selected pair of shift gears. The state in which one pair of the shift gears 57 and 59 meshes to transmit the drive force from the main shaft 55 to the drive shaft 58 is a gear-in state.

An operation for shifting a gear by selecting the shift gears 57 and the shift gears 59 is made by using a shift cam 79. A plurality of cam grooves 60 (three in FIG. 2) is formed in the shift cam 79. Shift forks 61 are mounted in each of the cam grooves 60. Each of the shift forks 61 engages with a predefined gear in the shift gears 57 and 59 on the main shaft 55 and the drive shaft 58. As the shift cam 79 rotates, each of the shift forks 61 moves axially along the cam grooves 60. A predefined gear in the shift gears 57 and 59 fitted in the main shaft 55 and the drive shaft 58 by a spline moves axially, being linked with the movement of the shift forks 61. Consequently, as the shift gears 57 and 59 having axially moved engage with some other shift gears 57 and 59 rotating freely in relation to the main shaft 55 and the drive shaft 58, gears are shifted. The transmission 80 is constituted with the shift gears 57 and 59 and the shift cam 79.

A vehicle speed sensor 69 is provided to the drive shaft 58. In addition, a gear position sensor 70 for detecting the gear position (the amount of rotation of the shift cam) is linked to the shift cam 79.

FIG. 3 is a drawing for illustrating a simplified view of the constitution of the hydraulic buffer 151 provided to the front wheel suspension system 150 shown in FIG. 1. Since the constitution of the hydraulic buffer 151 provided to the rear wheel suspension system 180 is generally similar to the constitution of the hydraulic buffer 151 of the front wheel suspension system 150, its description is omitted.

The hydraulic buffer 151 has a hydraulic cylinder 153 and a piston 154 movably fitted together by insertion into the hydraulic cylinder 153. The hydraulic cylinder 153 has a tube 153a generally in a cylindrical shape. The lower end of the tube 153a is shut by a head cover 153b, and its upper end is shut by a rod cover 153c. The inside of the hydraulic cylinder 153 is filled with hydraulic fluid.

The piston 154 is fitted together by insertion into the tube 153a. As a result, the inside of the hydraulic cylinder 153 is divided into a rod side oil chamber 157 and a head side oil chamber 158. As the piston 154 moves to the side of the rod cover 153c (to the upper side in the drawing), the total length of the hydraulic buffer 151 expands. This process is referred to as an expansion process. On the other hand, as the piston 154 moves to the side of the head cover 153b (to the lower side in the drawing), the total length of the hydraulic buffer 151 contracts. This process is referred to as a contraction process.

A check valve 159 is provided to the piston 154. The check valve 159 passes hydraulic fluid from the head side oil chamber 158 only to the rod side oil chamber 157.

A first oil passage 163 is connected to the rod side oil chamber 157 in the hydraulic cylinder 153. An expansion side damping force control valve 165 described below and a fixed throttle 166 for generating the damping force are parallely provided to the first oil passage 163. A second oil passage 164 is connected to the head side oil chamber 158 in the hydraulic cylinder 153. A check valve 167, a fixed throttle 168 for generating the damping force, and a contraction side damping force control valve 169 described below are parallely provided to the second oil passage 164. The first oil passage 163 is connected to a part between the head side oil chamber 158 and the check valve 167 in the second oil passage 164.

An accumulator 170 is connected to the second oil passage 164. The accumulator 170 has a gas chamber 173 filled with high pressure gas, an oil chamber 171 filled with hydraulic fluid, and a movable partition 172 for separating the gas chamber 173 and the oil chamber 171. The second oil passage 164 is connected to the oil chamber 171 of the accumulator 170. This accumulator 170 urges the hydraulic fluid in the oil chamber 171 by the pressure of the high pressure gas in the gas chamber 173. The check valve 167 is connected so that the hydraulic fluid flows from the side of the accumulator 170 only to the head side oil chamber 158.

The fixed throttles 166 and 168 are constituted with an orifice and a tabular valve. The fixed throttle 166 provided to the first oil passage 163 generates the damping force by the flow of the hydraulic fluid from the upper side to the lower side when the hydraulic buffer 151 is in an expansion process. On the other hand, the fixed throttle 168 provided to the second oil passage 164 generates the damping force by the flow of the hydraulic fluid from the lower side to the upper side when the hydraulic buffer 151 is in a contraction process.

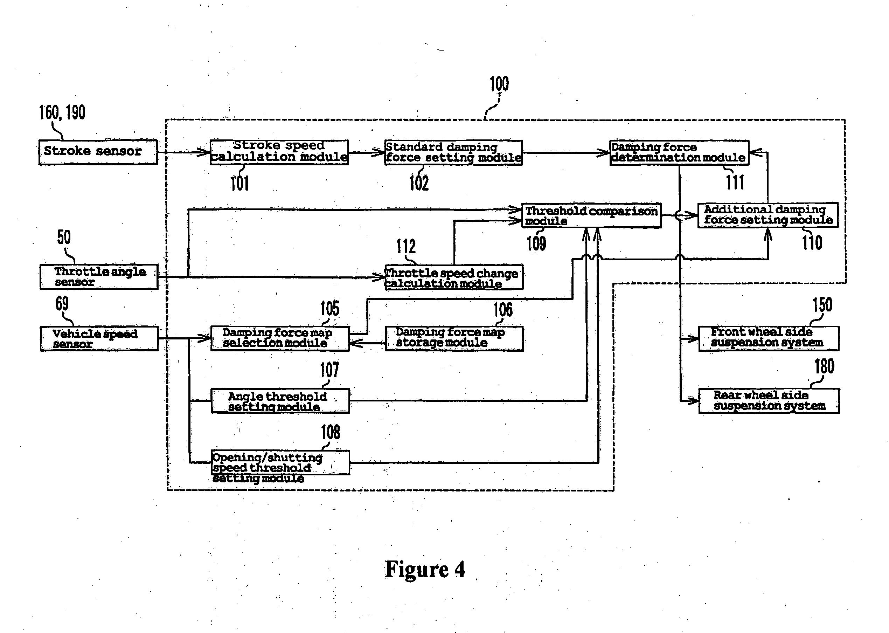

The expansion side damping force control valve 165 and the contraction side damping force control valve 169 pass the hydraulic fluid to the side of the accumulator 170 (to the side of a low pressure) when the oil pressure on the side of the hydraulic cylinder 153 (on the side of a high pressure) exceeds a predefined release pressure. The release pressure is increased or decreased by linear solenoids 174 and 178 provided in the expansion side damping force control valve 165 and in the contraction side damping force control valve 169 respectively. Specifically, the expansion side damping force control valve 165 changes the damping force generated when a piston rod 155 is in the expansion process (the damping force of the expansion side) . On the other hand, the contraction side damping force control valve changes the damping force generated when the piston rod 155 is in the contraction process (the damping force of the contraction side). The linear solenoids 174 and 178 described above are operated and controlled by a suspension controller 100 shown in FIG. 4.

FIG. 4 is a block diagram illustrating a simplified view of the constitution of the suspension controller 100. Stroke sensors 160 and 190, the throttle angle sensor 50, and the vehicle speed sensor 69 (refer also to FIG. 2) are provided as apparatuses for providing signals to the suspension controller 100. The stroke sensor 160 detects the amount of the stroke of the front wheel suspension system 150. On the other hand, the stroke sensor 190 detects the amount of the stroke of the rear wheel suspension system 180.

The amounts of the strokes calculated by the stroke sensors 160 and 190 are input to a stroke speed calculation module 101 provided to the suspension controller 100 respectively. The stroke speed calculation module 101 calculates a stroke speed change of the front wheel suspension system 150 and the rear wheel side suspension system 180 on the basis of the input amounts of the strokes.

The stroke speed change calculated in the stroke speed calculation module 101 is input to a standard damping force setting module 102 provided to the suspension controller 100. The standard damping force setting module 102 sets a standard damping force on the basis of the input stroke speed change. The standard damping force is one element for determining the damping force finally generated in the front wheel suspension system 150 and in the rear wheel suspension system 180 (a final damping force). Specifically, the sum of the standard damping force, an additional damping force described below, and a fixed damping force described below is the final damping force. A damping force determination module 111 connected to the standard damping force setting module 102 determines the final damping force.

The throttle angle detected by the throttle angle sensor 50 is input to each of a throttle speed change calculation module 112 and a threshold comparison module 109 of the suspension controller 100 . The throttle speed change calculation module 112 calculates the speed change of the throttle angle on the basis of the input throttle angle. In the present invention, when the throttle valve 46 is open, the speed change is referred to as an opening speed. When the throttle valve 46 is shut, the speed change is referred to as a shutting speed.

The threshold comparison module 109 compares the speed change input from the throttle speed change calculation module 112 (the opening speed or the shutting speed) with the threshold in relation to the opening speed or the shutting speed set by an opening/shutting speed threshold setting module 108 described below (an opening speed threshold or a shutting speed threshold) . In addition, the threshold comparison module 109 compares the throttle angle input from the throttle angle sensor 50 with the threshold in relation to the throttle angle set by an opening threshold setting module described below (an angle threshold).

A comparison result by the threshold comparison module 109 is input to an additional damping force setting module 110 of the suspension controller 100. The additional damping force setting module 110 determines whether an additional damping force is to be set or not on the basis of the comparison result. The additional damping force setting module 110 sets an additional damping force on the basis of a damping force map selected by a damping force map selection module 105 described below when having determined that an additional damping force is to be set.

The additional damping force set by the additional damping force setting module 110 and the standard damping force set by the standard damping force setting module 102 are input to the damping force determination module 111 respectively. The damping force determination module 111 calculates the sum of the standard damping force, the additional damping force, and the fixed damping force input respectively. As mentioned above, the sum is the final damping force to be generated by the front wheel suspension system 150 and the rear wheel suspension system 180. The damping force determination module 111 provides the calculated damping force to the front wheel suspension system 150 and to the rear wheel side suspension system 180.

The vehicle speed detected by the vehicle speed sensor 69 is input to each of the damping force map selection module 105, an angle threshold setting module 107, and the opening/shutting speed threshold setting module 108. The damping force map selection module 105, the angle threshold setting module 107, and the opening/shutting speed threshold setting module 108 are provided in the suspension controller 100.

The damping force map selection module 105 selects a damping force map to be adopted from a plurality of types of damping force maps stored in a damping force map storage module 106 on the basis of the vehicle speed input from the vehicle speed sensor 69. A damping force map is a map for regulating the relation between the speed change of the throttle angle and the additional damping force as described below in detail. A multiplicity of types of damping force maps containing different relations between the speed change and the additional damping force is stored in the damping force map storage module 106.

The angle threshold setting module 107 sets the angle threshold on the basis of the input vehicle speed. The angle threshold having been set is input to the threshold comparison module 109. This angle threshold having been input is the angle threshold to be compared with the throttle angle by the threshold comparison module 109.

The opening/shutting speed threshold setting module 108 sets the opening speed threshold or the shutting speed threshold on the basis of the input vehicle speed. The opening/shutting speed threshold having been set is input to the threshold comparison module 109. The opening/shutting speed threshold having been input is the opening/shutting speed threshold to be compared with the speed change of the throttle angle by the threshold comparison module 109.

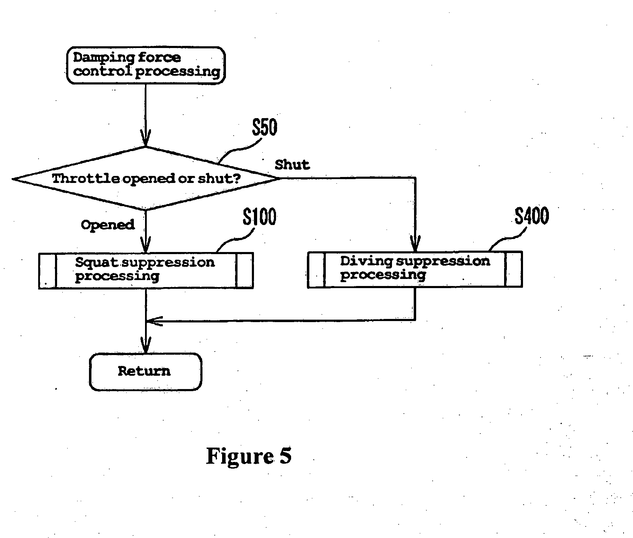

The damping force control of the front wheel suspension system 150 and the rear wheel suspension system 180 will be described further in detail hereinafter. FIG. 5 is a flow chart illustrating the flow of a damping force control processing. When the damping force control processing is started, a step S50 determines whether the throttle valve 46 is being opened or shut. In the processing, the suspension controller 100 determines whether the throttle angle is changing in the direction for opening the throttle valve 46 or in the direction for shutting the throttle valve 46.

If the throttle valve 46 is being opened, a squat suppression processing is executed in a step S100. On the other hand, if the throttle valve 46 is being shut, a diving suppression processing is executed in a step S400. The squat suppression processing and the diving suppression processing will be described below in detail. When the processing in the step S100 or the processing in the step S400 is executed, the damping force control processing is ended.

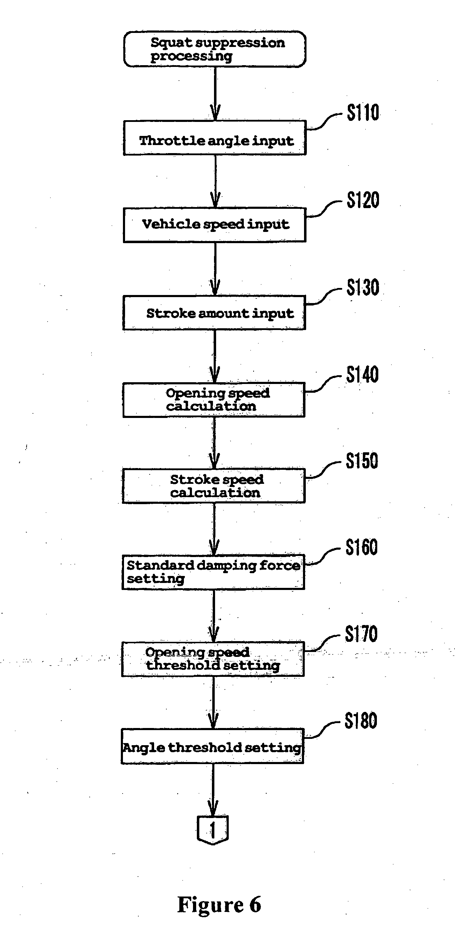

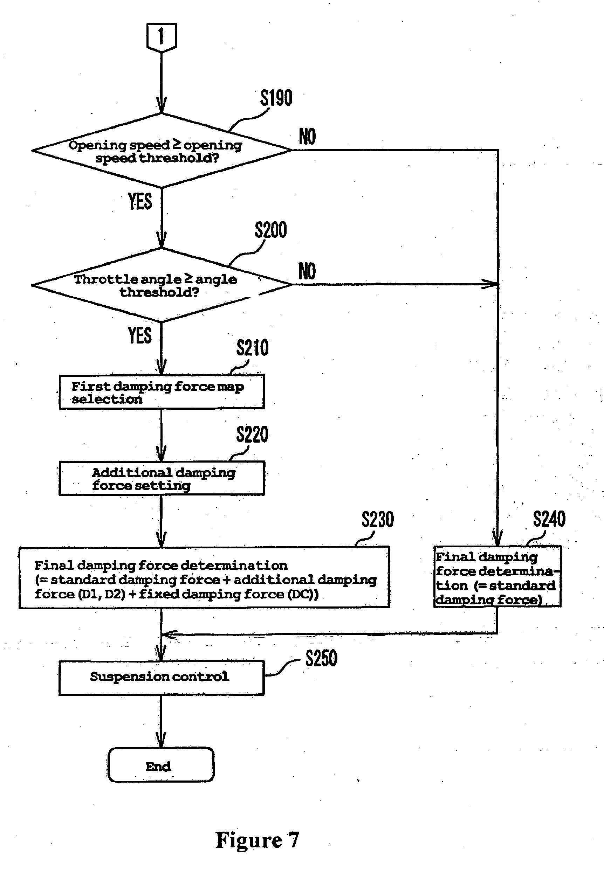

FIG. 6 and FIG. 7 are flow charts illustrating the flow of the squat suppression processing called and executed in the step S100 of the flow chart shown in FIG. 5. The squat suppression processing determines whether the condition for generating a squat is met or not on the basis of the opening speed and the throttle angle of the throttle valve 46. If the squat suppression processing determines that the condition is met, each of the front wheel suspension system 150 and the rear wheel suspension system 180 is controlled in order to suppress the squat.

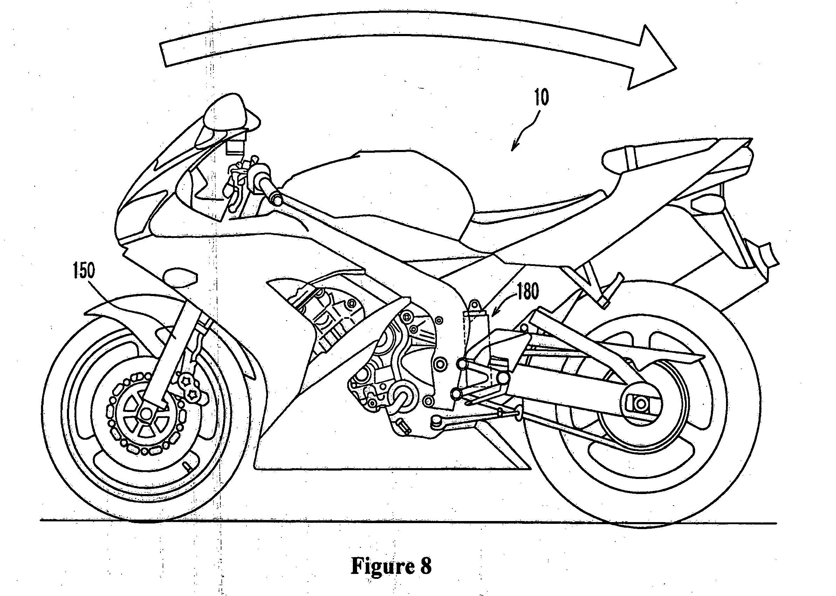

A squat of the motorcycle 10 will be described with reference to FIG. 8 hereinafter. As indicated by a white arrow in FIG. 8, a squat occurs with the rear part of the vehicle body deflecting downward and the front part of the vehicle body deflecting upward when the accelerator is opened suddenly. In the squat suppression processing according to FIG. 6 and FIG. 7, the damping force control of the front wheel suspension system 150 and the rear wheel suspension system 180 is executed in order to suppress the squat when the condition for generating such a squat is met.

When the squat suppression processing is started, a throttle angle is input from the throttle angle sensor 50 in a step S110 in FIG. 6. A vehicle speed is input from the vehicle speed sensor 69 in a step S120. The amount of a stroke of the front wheel suspension system 150 and the amount of a stroke of the rear wheel suspension system 180 are input from the stroke sensors 160 and 190 respectively in a step S130.

After the processing in the step S130 is executed, the opening speed of the throttle valve 46 is calculated in a step S140. In the processing, the throttle speed change calculation module 112 of the suspension controller 100 (refer to FIG. 4) calculates the opening speed of the throttle valve 46 on the basis of the throttle angle input from the processing in the step S110. Specifically, for example, the opening speed is calculated from the throttle angle input by the processing in the step S110 at an immediately previous time and the throttle angle input by the processing in the step S110 at a predefined time earlier than the immediately previous time. When the processing in the step S140 is executed, the throttle speed change calculation module 112 of the suspension controller 100 functions as an opening speed calculation or determination device of the present invention.

After the processing in the step S140 is executed, the stroke speed is calculated in a step S150. In the processing, the stroke speed calculation module 101 of the suspension controller 100 calculates each of the stroke speed of the front wheel suspension system 150 and the stroke speed of the rear wheel suspension system 180 on the basis of the amounts of the strokes of the front wheel suspension system 150 and the rear wheel suspension system 180 input from the processing in the step S130.

After the processing in the step S150 is executed, a standard damping force is set in a step S160. In this processing, the standard damping force setting module 102 of the suspension controller 100 sets the standard damping force of the front wheel suspension system 150 and the rear wheel suspension system 180 on the basis of the stroke speed calculated in the processing in the step S150. For example, when the calculated stroke speed is the speed in the direction of the expansion of a suspension system (the front wheel suspension system 150 or the rear wheel suspension system 180), a higher standard damping force of the expansion side is set as the stroke speed becomes higher. On the other hand, when the calculated stroke speed is the speed in the direction of the contraction of a suspension system, a higher standard damping force of the contraction side is set as the stroke speed becomes higher.

After the processing in the step S160 is executed, the opening speed threshold is set in a step S170. The opening speed threshold is a threshold used for determining whether the squat suppression is executed or not in the processing in a step S190 described below. In the processing, the opening/shutting speed threshold setting module 108 of the suspension controller 100 sets the opening speed threshold on the basis of the vehicle speed input from the processing in the step S120. When the processing in the step S170 is executed, the opening/shutting speed threshold setting module 108 of the suspension controller 100 functions as a first threshold setting device of the present invention for setting the first threshold (the opening speed threshold).

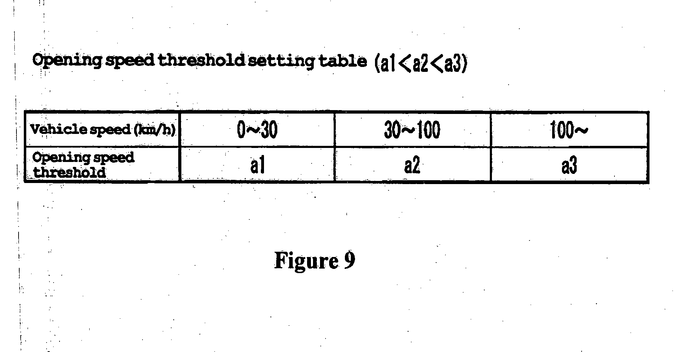

An opening speed threshold setting table shown in FIG. 9 is referenced in the processing in the step S170. As illustrated in FIG. 9, an opening speed threshold a1 is set if the vehicle speed is 0 (km/h) or higher and less than 30 (km/h). An opening speed threshold a2 (>al) is set if the vehicle speed is 30 (km/h) or higher and less than 100 (km/h) . An opening speed threshold a3 (>a2) is set if the vehicle speed is 100 (km/h) or higher. In other words, as the vehicle speed becomes lower, the lower opening speed threshold is set.

When the vehicle speed is relatively low, the squat occurs even if an accelerator is opened relatively slowly. On the other hand, when the vehicle speed is relatively high, such a squat does not occur unless an accelerator is opened relatively suddenly. In other words, as the vehicle speed becomes lower, the opening speed for generating a squat becomes lower.

In the embodiment, the calculated opening speed and the opening speed threshold are compared in the processing in the step S190 described below. When the opening speed is equal to or higher than the opening speed threshold, the squat suppression is executed if the condition in relation to a step S200 described below is met. On the other hand, as the vehicle speed becomes lower, the lower opening speed threshold is set as illustrated in FIG. 9. Therefore, when the vehicle speed is low, the squat suppression is executed even if the calculated opening speed is relatively low in the embodiment. On the other hand, when the vehicle speed is high, the squat suppression is not executed unless the calculated opening speed is relatively high. As described above, the squat suppression is executed in accordance with the relation between the vehicle speed and the opening speed for generating a squat in the embodiment. Consequently, it is possible to improve ride comfort and driving stability.

After the processing in the step S170 is executed, an angle threshold is set in a step S180. The angle threshold is a threshold used for determining whether the squat suppression is to be executed or not in the processing in the step S200 described below. When the two conditions in relation to the opening speed described above and the throttle angle in relation to the step S200 are met, the squat suppression is executed in the embodiment. In the step S180, the angle threshold setting module 107 of the suspension controller 100 sets the angle threshold on the basis of the vehicle speed input from the processing in the step S120. When the processing in the step S180 is executed, the angle threshold setting module 107 of the suspension controller 100 functions as a second threshold setting device of the present invention for setting the second threshold (the angle threshold) .

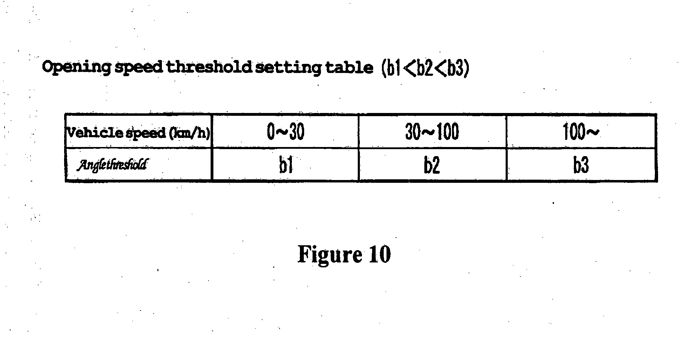

An angle threshold setting table shown in FIG. 10 is referenced in the processing in the step S180. As illustrated in FIG. 10, an angle threshold b1 is set if the vehicle speed is 0 (km/h) or higher and less than 30 (km/h). An angle threshold b2 (>b1) is set if the vehicle speed is 30 (km/h) or higher and less than 100 (km/h). An angle threshold b3 (>b2) is set if the vehicle speed is 100 (km/h) or higher. In other words, as the vehicle speed becomes lower, a lower (angle) threshold is set.

When the vehicle speed is relatively low, the squat described above occurs even if an accelerator is opened at a time when the throttle angle is relatively small. On the other hand, when the vehicle speed is relatively high, such a squat does not occur unless an accelerator is opened at a time when the throttle angle is relatively large. In other words, as the vehicle speed becomes lower, the squat described above occurs even if an accelerator is opened at a time when the throttle angle is smaller.

In the embodiment, the input throttle angle and the angle threshold are compared in the processing in the step S200 described below. When the throttle angle is equal to or larger than the angle threshold, the squat suppression is executed. As the vehicle speed becomes lower, the lower angle threshold is set as illustrated in FIG. 10. Therefore, when the vehicle speed is low, the squat suppression is executed even if the accelerator is opened at a time when the throttle angle is relatively small in the embodiment. On the other hand, when the vehicle speed is high, the squat suppression is not executed unless the accelerator is opened at a time when the throttle angle is relatively large. As described above, the squat suppression is executed in accordance with the relation between the vehicle speed and the throttle angle for generating a squat by the operation of the accelerator in the embodiment. Consequently, it is possible to improve ride comfort and driving stability.

After the processing in the step S180 is executed, the step S190 in FIG. 7 determines whether the opening speed is equal to or higher than the opening speed threshold or not. In this processing, the threshold comparison module 109 of the suspension controller 100 determines whether the opening speed calculated in the processing in the step S140 is equal to or higher than the opening speed threshold or not.

If the step S190 determines that the opening speed is equal to or higher than the opening speed threshold, the step S200 determines whether the throttle angle is equal to or larger than the angle threshold or not. In this processing, the threshold comparison module 109 of the suspension controller 100 determines whether or not the throttle angle input from the processing in the step S110 is equal to or larger than the angle threshold set by the processing in the step S180.

If the step S200 determines that the throttle angle is equal to or larger than the angle threshold, a first damping force map is selected in a step S210. In the processing, the damping force map selection module 105 of the suspension controller 100 selects a first damping force map to be adopted from a plurality of types of the first damping force maps stored in the damping force map storage module 106 on the basis of the vehicle speed input from the processing in the step S120. When the processing in the step S210 is executed, the damping force map selection module 105 of the suspension controller 100 functions as a selection device of the present invention.

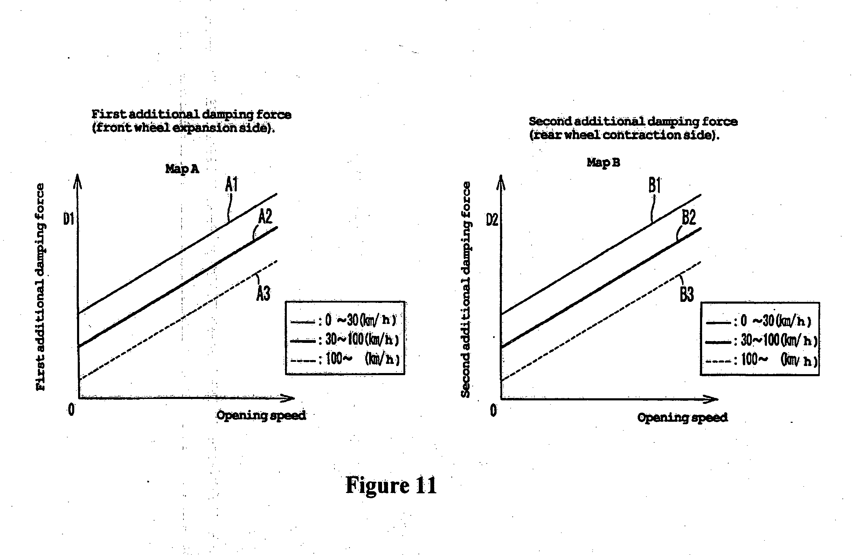

FIG. 11 is a drawing illustrating the characteristic of a plurality of types of the first damping force maps stored in the damping force map storage module 106. The first damping force maps consist of a map A for regulating the relation between the opening speed and the additional damping force on the expansion side (on the expansion side of the front wheel) of the front wheel suspension system 150 (first additional damping forces D1) and a map B for regulating the relation between the opening speed and the additional damping force on the contraction side (on the contraction side of the rear wheel) of the rear wheel suspension system 180 (second additional damping forces D2).

Three types of maps A1, A2, and A3 corresponding to vehicle speeds are stored as the map A. The map A1 is the map selected when the vehicle speed is equal to or higher than 0 (km/h) and less than 30 (km/h). The map A2 is the map selected when the vehicle speed is equal to or higher than 30 (km/h) and less than 100 (km/h). The map A3 is the map selected when the vehicle speed is equal to or higher than 100 (km/h).

In addition, three types of maps B1, B2, and B3 corresponding to vehicle speeds are stored as the map B. The map B1 is the map selected when the vehicle speed is equal to or higher than 0 (km/h) and less than 30 (km/h). The map B2 is the map selected when the vehicle speed is equal to or higher than 30 (km/h) and less than 100 (km/h). The map B3 is the map selected when the vehicle speed is equal to or higher than 100 (km/h). In other words, the three types of first damping force maps consisting of a first damping force map consisting of the map A1 and the map B1, a first damping force map consisting of the map A2 and the map B2, and a first damping force map consisting of the map A3 and the map 3 are stored in the damping force map storage module 106. In the processing in the step S210, the first damping force map consisting of the map A1 and the map B1 is selected, for example, when the input vehicle speed is 25 (km/h).

Even when the speed of opening the accelerator is the same, the amount of the deflection of the squat is different between the case in which the vehicle speed is low and the case in which the vehicle speed is high. Specifically, when the vehicle speed is low, even if the speed of the operation for opening the accelerator is the same, the amount of the deflection is larger than that of the time when the vehicle speed is high.

If the maps A1, A2, and A3 are compared, the first additional damping forces D1 set for the same opening speed gradually become larger in the order of the maps A3, A2, and A1. As for the maps B1, B2, and B3, the second additional damping forces D2 set for same opening speed gradually become larger in the order of the maps B3, B2, and B1. Therefore, as the vehicle speed becomes lower, a first damping force map containing larger values to be set as a first additional damping force D1 and a second additional damping force D2 is selected. As described above, even if a squat generating a large deflection is generated by the operation for opening the accelerator at a time when the vehicle speed is low, a squat suppression strong enough to offset the deflection is executed in the embodiment. On the other hand, if a squat generating a small deflection is generated by the operation for opening the accelerator at a time when the vehicle speed is high, a squat suppression is softly executed. As a result, it is possible to improve ride comfort and driving stability.

After the processing in the step S210 is executed, an additional damping force is set in a step S220. In the processing, the additional damping force setting module 110 of the suspension controller 100 sets a first additional damping force D1 and a second additional damping force D2 on the basis of the opening speed calculated in the processing in the step S140.

The first damping force map selected in the processing in the step S210 is referenced in the processing in the step S220. As illustrated in FIG. 11, the values of the first additional damping forces D1 and the second additional damping forces D2 characteristically become larger in proportion to the opening speed in the three types of the first additional damping force maps.

As the speed of the operation for opening the accelerator becomes higher, the deflection of the squat becomes larger. In other words, as the opening speed becomes higher, the deflection of a squat becomes larger. In the embodiment, the values to be set as a first additional damping force D1 and a second additional damping force D2 become larger in proportion to the opening speed as illustrated in FIG. 11. In other words, as the opening speed becomes higher, a stronger squat suppression is executed. Consequently, a squat suppression of appropriate strength can be executed corresponding to the amount of the deflection of a squat. As a result, it is possible to improve ride comfort and driving stability.

After the processing in the step S220 is executed, a final damping force is determined in a step S230. In the processing, the damping force determination module 111 of the suspension controller 100 calculates the sum of the standard damping force, the additional damping force, and a predefined fixed damping force DC as the final damping force. Specifically, the final damping force of the front wheel suspension system 150 is calculated as the sum of the standard damping force set in the processing in the step S160, the first additional damping force D1 set in the processing in the step S220, and the predefined fixed damping force DC. In addition, the final damping force of the rear wheel suspension system 180 is calculated as the sum of the standard damping force set in the processing in the step S160, the second additional damping force D2 set in the processing in the step S220, and the predefined fixed damping force DC. The fixed damping force DC added to the standard damping force of the front wheel suspension system 150 and the fixed damping force DC added to the standard damping force of the rear wheel suspension system 180 can be the same value or can be different values. When the processing in the step S230 is executed, the damping force determination module 111 of the suspension controller 100 functions as a squat suppression device of the present invention.

The first additional damping force D1 and the second additional damping force D2 in proportion to the opening speed are set as illustrated in FIG. 11. Accordingly, when the opening speed is very low (when the operation for opening the accelerator is very slow), the first additional damping force D1 and the second additional damping force D2 to be added are also very small. In a case like this, the squat suppression force is extremely small. Consequently, the squat may not be optimally suppressed. In the embodiment however, the fixed damping force DC is added together with the first additional damping force D1 and the second additional damping force D2. Therefore, even when the opening speed is very low, the squat suppression force of a certain amount can be maintained, so that the squat is suppressed optimally. As a result, it is possible to improve ride comfort and driving stability.

As described above, when the two conditions, in relation to the opening speed in the step S190 and in relation to the throttle angle in the step S200 are met, the damping force of the front wheel expansion side and the damping force of the rear wheel contraction side are set high by the processing in the step S230. On the other hand, when either of the conditions is not met, the procedure proceeds to a step S240. Specifically, if the step S190 determines that the opening speed is not equal to or higher than the opening speed threshold (less than the opening speed threshold) or if the step S200 determines that the throttle angle is not equal to or larger than the angle threshold (less than the angle threshold), the procedure proceeds to the step S240.

In the step S240, the damping force determination module 111 of the suspension controller 100 determines the standard damping force set by the processing in the step S160 as the final damping force. In other words, the final damping forces of the front wheel suspension system 150 and the rear wheel suspension system 180 are set to the standard damping force. As described above, when either condition of the step S190 or of the step S200 is not met, neither the additional damping force nor the fixed damping force DC is added.

After the processing in the step S230 or in the step S240 is executed, a suspension control is executed in a step S250. In the processing, an operation control of the front wheel suspension system 150 and the rear wheel suspension system 180 (specifically, the operation control of the linear solenoids 174 and 178) is executed in order to generate the final damping force determined by the processing in the step S230 or in the step S240.

If the opening speed of the throttle valve 46 becomes less than the opening speed threshold while the suspension control is executed in the step S250 in the squat suppression processing described above, addition of the first additional damping force D1 and the second additional damping force D2 is terminated. In other words, while the first additional damping force D1 and the second additional damping force D2 are added, if the opening speed of the throttle valve 46 becomes less than the opening speed threshold, addition of the first additional damping force D1 and the second additional damping force D2 is terminated. In a case like this, it is preferable that the damping force on the expansion side of the front wheel suspension system 150 and the damping force on the contraction side of the rear wheel suspension system 180 having been added are reduced gradually in order to reduce an impact.

As described above, when the condition in relation to the opening speed is met (YES in the step S190 in FIG. 7), and if the condition in relation to the throttle angle is met (YES in the step S200), it is assumed that the conditions for generating a squat are met (refer to FIG. 8). Consequently, the squat suppression is executed. A high damping force on the expansion side of the front wheel suspension system 150 and a high damping force on the contraction side of the rear wheel suspension system 180 are set in the squat suppression. Specifically, the first additional damping force D1 and the fixed damping force DC are added to the standard damping force of the front wheel expansion side, and the second additional damping force D2 and the fixed damping force DC are added to the standard damping force of the rear wheel contraction side.

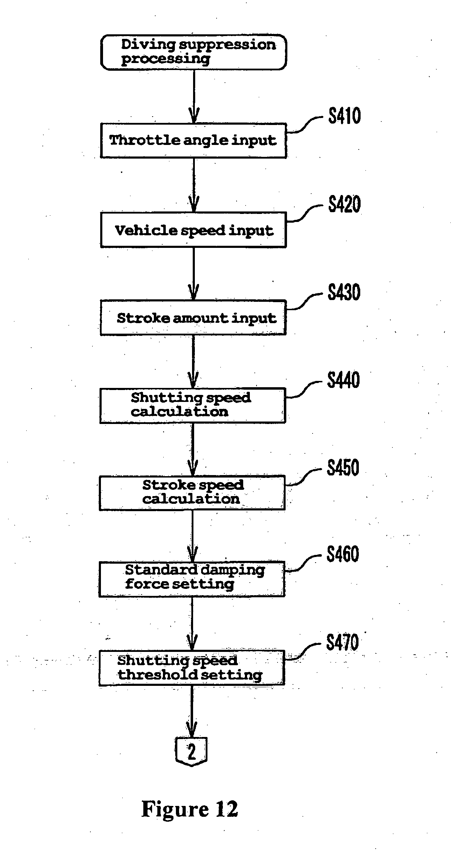

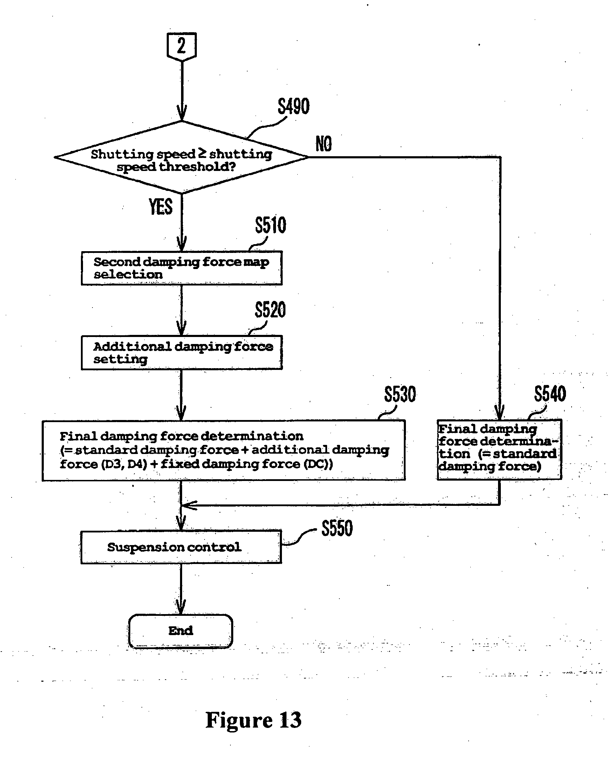

FIG. 12 and FIG. 13 are flow charts illustrating the flow of the diving suppression processing called and executed in the step S400 of the flow chart shown in FIG. 5. The diving suppression processing determines whether the condition for generating diving is met or not. When the diving suppression processing determines that the condition is met, each of the front wheel suspension system 150 and the rear wheel suspension system 180 is controlled in order to suppress diving.

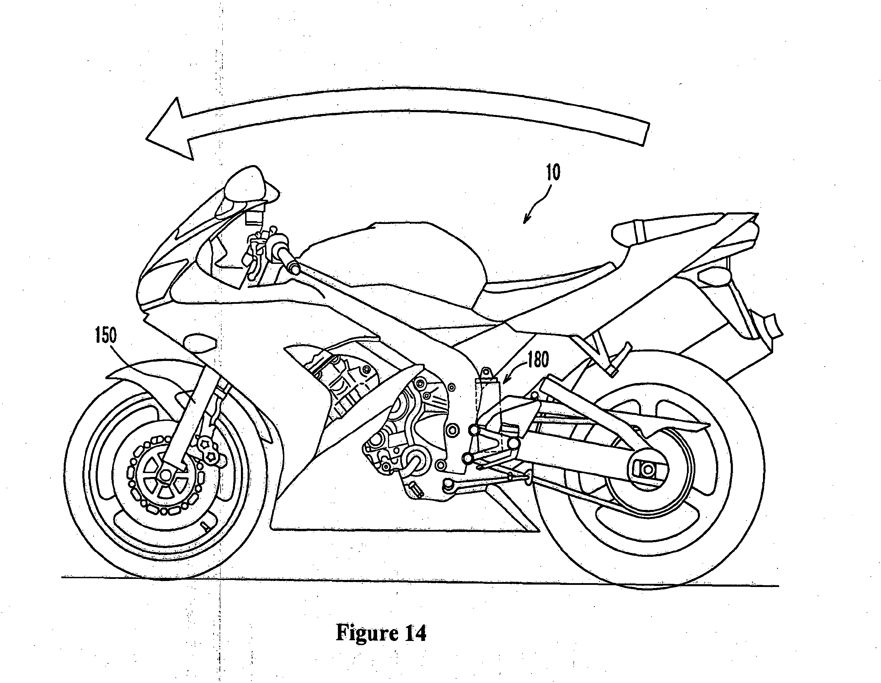

Diving of the vehicle body of the motorcycle 10 will be described with reference to FIG. 14 hereinafter. When the accelerator is suddenly shut, diving occurs and the vehicle body declines forward as indicated with a white arrow in FIG. 14. When the condition for generating diving is met, the diving suppression processing illustrated in FIG. 12 and in FIG. 13 executes the damping force control of the front wheel suspension system 150 and the rear wheel suspension system 180 to suppress diving.

The diving suppression processing illustrated in FIG. 12 and in FIG. 13 have many steps similar to those of the squat suppression processing illustrated in FIG. 6 and in FIG. 7. The description of the diving suppression processing will be mainly concentrated on differences from the squat suppression processing.

When the diving suppression processing is started, the processings in steps S410, S420, and S430 are executed as illustrated in FIG. 12. The processings are similar to the processings in the steps S110, S120, and S130 in FIG. 6. Therefore, their description is omitted.

After the processing in the step S430 is executed, the shutting speed of the throttle valve 46 is calculated in a step S440. In the processing, the throttle speed change calculation module 112 of the suspension controller 100 calculates the shutting speed of the throttle valve 46 on the basis of the throttle angle input from the processing in the step S410. Specifically, for example, the shutting speed is calculated from the throttle angle input by the processing in the step S410 at an immediately previous time and the throttle angle input by the processing in the step S410 at a predefined time earlier than the immediately previous time.

After the processing in the step S440 is executed, the processings in steps S450 and S460 are executed in sequence. The processings in the steps S450 and S460 are similar to the processings in the steps S150 and S160 in FIG. 6. Therefore, their description is omitted.

After the processing in the step S460 is executed, the shutting speed threshold is set in a step S470. The shutting speed threshold is a threshold used for determining whether the diving suppression is to be executed or not in the processing in a step S490 described below. In the processing, the opening/shutting speed threshold setting module 108 of the suspension controller 100 sets the shutting speed threshold on the basis of the vehicle speed input from the processing in the step S420.

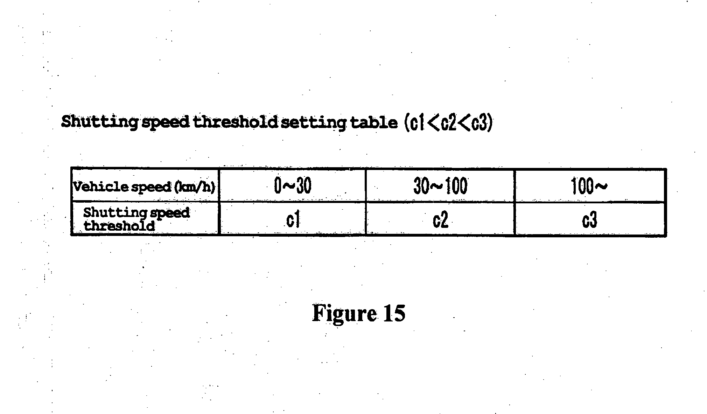

A shutting speed threshold setting table shown in FIG. 15 is referenced in the processing in the step 5470. As illustrated in FIG. 15, a shutting speed threshold $c_1$ is set if the vehicle speed is 0 (km/h) or higher and less than 30 (km/h). A shutting speed threshold $c_2$ (>$c_1$) is set if the vehicle speed is 30 (km/h) or higher and less than 100 (km/h). A shutting speed threshold $c_3$ (>$c_2$) is set if the vehicle speed is 100 (km/h) or higher. In other words, as the vehicle speed becomes lower, the lower the shutting speed threshold is set.

When the vehicle speed is relatively low, diving occurs even if an accelerator is shut relatively slowly. On the other hand, when the vehicle speed is relatively high, such diving does not occur unless an accelerator is shut relatively suddenly. In other words, as the vehicle speed becomes lower, the shutting speed for generating diving becomes lower.

In the embodiment, the calculated shutting speed and the shutting speed threshold are compared in the processing in the step S490 described below. When the shutting speed is equal to or higher than the shutting speed threshold, the diving suppression is executed. As the vehicle speed becomes lower, the lower shutting speed threshold is set as illustrated in FIG. 15. Therefore, when the vehicle speed is low, the diving suppression is executed even if the calculated shutting speed is relatively low. On the other hand, when the vehicle speed is high, the diving suppression is not executed unless the calculated shutting speed is relatively high. As described above, diving suppression is executed in accordance with the relation between the vehicle speed and the shutting speed for generating diving. Consequently, it is possible to improve ride comfort and driving stability.

After the processing in the step S470 is executed, the step S490 in FIG. 13 determines whether the shutting speed is equal to or higher than the shutting speed threshold or not. In this processing, the threshold comparison module 109 of the suspension controller 100 determines whether or not the shutting speed calculated in the processing in the step S440 is equal to or higher than the shutting speed threshold set by the processing in the step S470.

If the step S490 determines that the shutting speed is equal to or higher than the shutting speed threshold, a second damping force map is selected in a step S510. In the processing, the damping force map selection module 105 of the suspension controller 100 selects a second damping force map to be adopted from a plurality of types of second damping force maps stored in the damping force map storage module 106 on the basis of the vehicle speed input from the processing in the step S420.

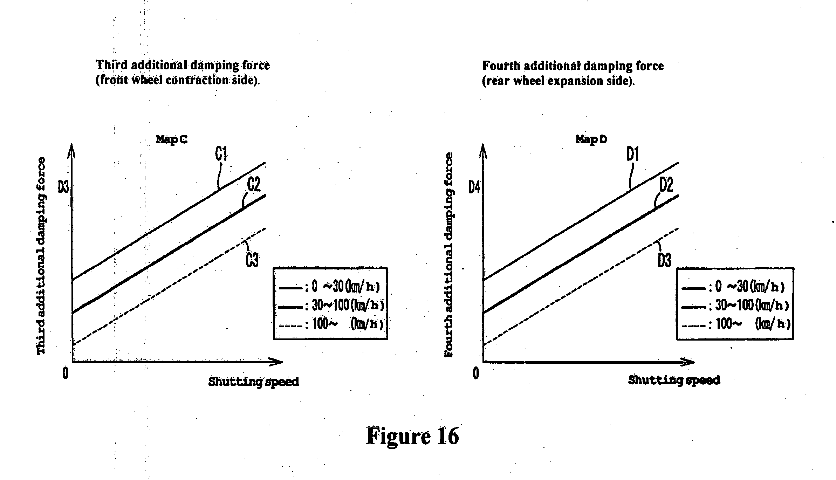

FIG. 16 is a drawing illustrating the characteristics of a plurality of types of the second damping force maps stored in the damping force map storage module 106. The second damping force maps consist of a map C for regulating the relation between the shutting speed and the additional damping force on the contraction side of the front wheel suspension system 150 (third additional damping forces D3) and a map D for regulating the relation between the opening speed and the additional damping force on the expansion side of the rear wheel suspension system 180 (fourth additional damping forces D4).

Three types of maps C1, C2, and C3 corresponding to the vehicle speeds are stored as the map C. The map C1 is the map selected when the vehicle speed is equal to or higher than 0 (km/h) and less than 30 (km/h). The map C2 is the map selected when the vehicle speed is equal to or higher than 30 (km/h) and less than 100 (km/h). The map C3 is the map selected when the vehicle speed is equal to or higher than 100 (km/h).

In addition, three types of maps D1, D2, and D3 corresponding to the vehicle speeds are stored as the map D. The map D1 is the map selected when the vehicle speed is equal to or higher than 0 (km/h) and less than 30 (km/h). The map D2 is the map selected when the vehicle speed is equal to or higher than 30 (km/h) and less than 100 (km/h). The map D3 is the map selected when the vehicle speed is equal to or higher than 100 (km/h). In other words, the three types of second damping force maps consisting of a second damping force map consisting of the map C1 and the map D1, a second damping force map consisting of the map C2 and the map D2, and a second damping force map consisting of the map C3 and the map D3 are stored in the damping force map storage module 106. In the processing in the step S510, the second damping force map consisting of the map C1 and the map B1 is selected, for example, when the input vehicle speed is 25 (km/h).

Even when the speed of the operation for shutting the accelerator is the same, the amount of the deflection of diving is different between the case in which the vehicle speed is low and the case in which the vehicle speed is high. Specifically, when the vehicle speed is low, even if the speed of the operation for shutting the accelerator is the same, the amount of the deflection is larger than that of the time when the vehicle speed is high.

If the maps C1, C2, and C3 are compared, the third additional damping forces D3 set for the same shutting speed gradually becomes larger in the order of the maps C3, C2, and A1. As for the maps D1, D2, and D3, the fourth additional damping forces D4 set for the same shutting speed gradually become larger in the order of the maps D3, D2, and D1. Therefore, as the vehicle speed becomes lower, a second damping force map containing larger values to be set as a third additional damping force D3 and a fourth additional damping force D4 is selected. As described above, even if diving generating a large deflection is generated by the operating of shutting the accelerator at a time when the vehicle speed is low, a diving suppression strong enough to offset the deflection is executed in the embodiment. On the other hand, if diving generating a small deflection is generated by the operation of shutting the accelerator at a time when the vehicle speed is high, a diving suppression is softly executed. As a result, it is possible to improve ride comfort and driving stability.

After the processing in the step S510 is executed, an additional damping force is set in a step S520. In this processing, the additional damping force setting module 110 of the suspension controller 100 sets a third additional damping force D3 and a fourth additional damping force D4 on the basis of the shutting speed calculated in the processing in the step S440.

The second damping force map selected in the processing in the step S510 is referenced in the processing in the step S520. As illustrated in FIG. 16, the values of the third additional damping force D3 and the fourth additional damping force D4 characteristically become larger in proportion to the shutting speed in the three types of the second damping force maps.

As the speed of the operation of shutting the accelerator becomes higher, the deflection of the diving becomes larger. In other words, as the shutting speed becomes higher, the deflection of diving becomes larger. In the embodiment, the values to be set as a third additional damping force D3 and a fourth additional damping force D4 become larger in proportion to the shutting speed as illustrated in FIG. 16. In other words, as the shutting speed becomes higher, the stronger diving suppression is executed. Consequently, a diving suppression of appropriate strength can be executed corresponding to the amount of the deflection of a diving. As a result, it is possible to improve ride comfort and driving stability.

After the processing in the step S520 is executed, a final damping force is determined in a step S530. In this processing, the damping force determination module 111 of the suspension controller 100 calculates the final damping force of the front wheel suspension system 150 as the sum of the standard damping force set in the processing in the step S460, the third additional damping force D3 set in the processing in the step S520, and the predefined fixed damping force DC. In addition, the final damping force of the rear wheel suspension system 180 is calculated as the sum of the standard damping force set in the processing in the step S460, the fourth additional damping force D4 set in the processing in the step S520, and the predefined fixed damping force DC. The fixed damping force DC added to the standard damping force of the front wheel suspension system 150 and the fixed damping force DC added to the standard damping force of the rear wheel suspension system 180 can be the same value or can be different values. When the processing in the step S530 is executed, the damping force determination module 111 of the suspension controller 100 functions as a diving suppression device of the present invention.

The third additional damping force D3 and the fourth additional damping force D4 in proportion to the shutting speed are set as illustrated in FIG. 16. Accordingly, when the shutting speed is very low (when the operation of shutting the accelerator is very slow), the third additional damping force D3 and the fourth additional damping force D4 to be added are also very small. In a case like this, the diving suppression force is extremely small. Consequently, the diving may not be optimally suppressed. In this embodiment however, the fixed damping force DC is added together with the third additional damping force D3 and the fourth additional damping force D4. Therefore, even when the shutting speed is very low, the diving suppression force of a certain amount can be maintained, so that the diving is suppressed optimally. As a result, it is possible to improve ride comfort and driving stability.

As described above, when the condition in relation to the shutting speed concerning the step S490 is met, the damping force of the front wheel contraction and the damping force of the rear wheel expansion are set high by the processing in the step S530. On the other hand, when the condition is not met, the procedure proceeds to a step S540.

In the step S540, the damping force determination module 111 of the suspension controller 100 determines the standard damping force set by the processing in the step S460 as the final damping force. In other words, the final damping forces of the front wheel side suspension system 150 and the rear wheel side suspension system 180 are set to the standard damping force. Therefore, addition of an additional damping force (the third additional damping force D3 and the fourth additional damping force D4) and the fixed damping force DC is not executed.

After the processing in the step S530 or in the step S540 is executed, a suspension control is executed in the step S550. In the processing, an operation control of the front wheel suspension system 150 and the rear wheel suspension system 180 is executed in order to generate the final damping force determined by the processing in the step S530 or in the step S540.

If the shutting speed of the throttle valve 46 becomes less than the shutting speed threshold while the suspension control is executed in the step S550 in the diving suppression processing described above, addition of the third additional damping force D3 and the fourth additional damping force D4 is terminated. In other words, while the third additional damping force D3 and the fourth additional damping force D4 are added, if the shutting speed of the throttle valve 46 becomes less than the shutting speed threshold, addition of the third additional damping force D3 and the fourth additional damping force D4 is terminated. In a case like this, it is preferable that the damping force on the contraction side of the front wheel side suspension system 150 and the damping force on the expansion side of the rear wheel side suspension system 180 having been added are reduced gradually in order to reduce an impact.

As described above, when the condition in relation to the shutting speed is met (YES in the step S490 if FIG. 13), it is assumed that the condition for generating diving is met (refer to FIG. 14). Consequently, the diving suppression is executed. A high damping force on the contraction side of the front wheel suspension system 150 and a high damping force on the expansion side of the rear wheel suspension system 180) are set in the diving suppression. Specifically, the third additional damping force D3 and the fixed damping force DC are added to the standard damping force of the front wheel contraction side, and the fourth additional damping force D4 and the fixed damping force DC are added to the standard damping force of the rear wheel expansion side.

In the motorcycle 10 according to the embodiment, the squat suppression is executed on the basis of one condition that the opening speed of the throttle valve 46 is equal to or higher than the opening speed threshold as described above. A high damping force on the expansion side of the front wheel side suspension system 150 and a high damping force on the contraction side of the rear wheel side suspension system 180 are set in the squat suppression. The opening speed threshold is set according to the vehicle speed detected by the vehicle speed sensor 69. As the opening speed at a time when a squat is generated varies according to the vehicle speed, it is possible to execute the squat suppression corresponding to the relation between the opening speed and the vehicle speed in the constitution described above. As a result, it is possible to improve ride comfort and driving stability.

In the motorcycle 10, the diving suppression is executed on the basis of one condition that the shutting speed of the throttle valve 46 is equal to or higher than the shutting speed threshold. A high damping force on the contraction side of the front wheel suspension system 150 and a high damping force on the expansion side of the rear wheel suspension system 180 are set in the diving suppression. In addition, the shutting speed threshold is set according to the vehicle speed detected by the vehicle speed sensor 69. As the shutting speed at a time when a diving is generated varies according to the vehicle speed, as is the case of the squat, it is possible to execute diving suppression corresponding to the relation between the shutting speed and the vehicle speed in the constitution described above. As a result, it is possible to improve ride comfort and driving stability.

In the motorcycle 10 according to the embodiment, as the vehicle speed becomes lower, the lower opening speed threshold is set. As the vehicle speed becomes lower, the opening speed for generating a squat characteristically becomes lower in the motorcycle 10. Therefore, it is possible to execute the squat suppression in accordance with the relation between the vehicle speed and the opening speed for generating a squat in the constitution described above. As a result, it is possible to improve ride comfort and driving stability.

In the motorcycle 10 according to the embodiment, as the vehicle speed becomes lower, the lower shutting speed threshold is set. As the vehicle speed becomes lower, the shutting speed for generating diving characteristically becomes lower in the motorcycle 10, as is the case of the squat. Therefore, it is possible to execute the diving suppression in accordance with the relation between the vehicle speed and the shutting speed for generating diving in the constitution described above. As a result, it is possible to improve ride comfort and driving stability.

In the motorcycle 10 according to the embodiment, the squat suppression is executed on the basis of one condition that the throttle angle is equal to or larger than the angle threshold. When the operation for opening the accelerator is executed with a relatively small throttle angle change, even if the throttle opening speed is more than the threshold, a squat may not be generated (or is not easily generated). Therefore, it is assumed that a squat is easily generated by the operation for opening the accelerator if the throttle angle is equal to or larger than a predefined level while the throttle opening speed of the operation for opening the accelerator is equal to or higher than the threshold. Therefore, the throttle angle at a time when a squat is generated by the operation for opening the throttle is set as the opening threshold in the embodiment. When the detected throttle angle is equal to or larger than the angle threshold, the squat suppression is executed. Consequently, only when the throttle angle is equal to or larger than the angle capable of generating a squat, the squat suppression can be executed. As a result, a suitable squat suppression can be provided.

In the motorcycle 10 according to the embodiment, as the vehicle speed becomes lower, the lower opening speed threshold is set as the angle threshold during the squat suppression. As the vehicle speed becomes lower, a squat characteristically occurs even if the accelerator is opened at a time when the throttle angle is small. Therefore, the squat suppression can be executed in accordance with the relation between the vehicle speed and the throttle angle for generating a squat by the operation of opening the accelerator in the constitution described above. As a result, it is possible to improve ride comfort and driving stability.

In the motorcycle 10 according to the embodiment, while a squat is suppressed, the first additional damping force D1 corresponding to the opening speed is added to the standard damping force on the expansion side of the front wheel suspension system 150, and the second additional damping force D2 corresponding to the opening speed is added to the standard damping force on the contraction side of the rear wheel suspension system 180. As a result, it is possible to set a high damping force on the front wheel expansion side and a high damping force on the rear wheel contraction side.

In the motorcycle 10, while diving is suppressed, the third additional damping force D3 corresponding to the shutting speed is added to the standard damping force on the contraction side of the front wheel suspension system 150, and the fourth additional damping force D4 corresponding to the shutting speed is added to the standard damping force on the expansion side of the rear wheel suspension system 180. As a result, it is possible to set a high damping force on the front wheel contraction side and a high damping force on the rear wheel expansion side.

In the motorcycle 10 according to the embodiment, the values of the first additional damping force D1 and the second additional damping force D2 become larger generally in proportion to the opening speed. As the opening operation is made more suddenly (as the opening speed is higher), the deflection change of the squat characteristically becomes larger in the motorcycle 10. In addition, the deflection change becomes larger generally in proportion to the opening speed. Consequently, it is possible to execute the squat suppression of appropriate strength corresponding to the amount of the deflection change of the squat in the constitution described above. As a result, it is possible to improve ride comfort and driving stability.

The third additional damping force D3 and the fourth additional damping force D4 become larger generally in proportion to the shutting speed in the motorcycle 10. As the shutting operation is made more suddenly (as the shutting speed is higher), the deflection change of the diving characteristically becomes larger in the motorcycle 10. In addition, the deflection change becomes larger generally in proportion to the shutting speed. Consequently, it is possible to execute the diving suppression of appropriate strength corresponding to the amount of the deflection change of the diving in the constitution described above. As a result, it is possible to improve ride comfort and driving stability.

In the motorcycle 10 according to the embodiment, while the first additional damping force D1 and the second additional damping force D2 are added during the squat suppression, the predefined fixed damping force DC is added with the first additional damping force D1 and the second additional damping force D2. Consequently, even when the opening speed is very low, the squat suppression force of a certain amount can be maintained. As a result, a squat is suppressed optimally, and it is possible to improve ride comfort and driving stability.

While diving is suppressed, when the third additional damping force D3 and the fourth additional damping force D4 are added in the motorcycle 10, the predefined fixed damping force DC is added with the third additional damping force D3 and the fourth additional damping force D4. Therefore, even when the shutting speed is very low, the diving suppression force of a certain amount can be maintained. As a result, diving may be optimally suppressed, and it is possible to improve ride comfort and driving stability.

In the motorcycle 10 according to the embodiment, a multiplicity of types of the first damping force maps for regulating the relation between the opening speed and the first additional damping force D1 and the relation between the opening speed and the second additional damping force are stored in the damping force map storage module 106. In addition, one of the first damping force maps corresponding to the vehicle speed detected by the vehicle speed sensor 69 is selected from a multiplicity of types of the first damping force maps. Consequently, the first additional damping force D1 and the second additional damping force D2 are set on the basis of the selected first damping force map. Even when the speed of the operation for opening the accelerator is the same, as the vehicle speed is different, the amount of the deflection of a squat varies. Consequently, it is possible to select the first damping force map corresponding to the amount of the deflection of the squat in the constitution described above. As a result, it is possible to improve ride comfort and driving stability.

A multiplicity of types of the second damping force maps for regulating the relation between the shutting speed and the third additional damping force D3 and the relation between the shutting speed and the fourth additional damping D4 is stored in the damping force map storage module 106 in the motorcycle 10. In addition, one of the second damping force maps corresponding to the vehicle speed detected by the vehicle speed sensor 69 is selected from a multiplicity of types of the second damping force map. Consequently, the third additional damping force D3 and the fourth additional damping force D4 are set on the basis of the selected second damping force map. Even when the speed of the operation for shutting the accelerator is the same, as the vehicle speed is different, the amount of the deflection of diving varies as same in the case of the squat suppression. Consequently, it is possible to select the second damping force map corresponding to the amount of the deflection of the diving in the constitution described above. As a result, it is possible to improve ride comfort and driving stability.

While the squat suppression processing is executed in the motorcycle 10, when the first additional damping force D1 and the second additional damping force D2 are added, if the opening speed of the throttle valve 46 becomes less than the opening speed threshold (the first threshold), addition of the first additional damping force D1 and the second additional damping force D2 is terminated. As a result, the squat suppression is not continued unnecessarily, and it is possible to improve ride comfort and driving stability. On the other hand, while the diving suppression processing is executed, when the third additional damping force D3 and the fourth additional damping force D4 are added, if the shutting speed of the throttle valve 46 becomes less than the shutting speed threshold (the third threshold), addition of the third additional damping force D3 and the fourth additional damping force D4 is terminated. As a result, the diving suppression is not continued unnecessarily, and it is possible to improve ride comfort and driving stability.

When addition of the first additional damping force D1 and the second additional damping force D2 is terminated, if the damping force on the expansion side of the front wheel suspension system 150 and the damping force on the contraction side of the rear wheel suspension system 180 are gradually reduced, a sudden change in the damping force can be avoided, so that an impact can be reduced. Similarly, when addition of the third additional damping force D3 and the fourth additional damping force D4 is terminated, if the damping force on the contraction side of the front wheel suspension system 150 and the damping force on the expansion side of the rear wheel suspension system 180 are gradually reduced, a sudden change in the damping force can be avoided, so that an impact can be reduced. As a result, it is possible to improve ride comfort and driving stability.

In the embodiment, when the throttle speed changes in the direction of opening the throttle, the squat suppression processing (FIG. 6 and FIG. 7) is executed. On the other hand, when the throttle speed changes in the direction of shutting the throttle, the diving suppression processing (FIG. 12 and FIG. 13) is executed. In other words, both of the squat suppression processing and the diving suppression processing are executed. However, only either one of the squat suppression processing or the diving suppression processing may be executed in the present invention.

As described above, a high damping force on the expansion side of the front wheel suspension system 150 and a high damping force on the contraction side of the rear wheel suspension system 180 are set in the squat suppression processing in the embodiment. However, only a high damping force on the expansion side of the front wheel suspension system 150 can be set or only a high damping force on the contraction side of the rear wheel suspension system 180 can be set in the squat suppression processing.

In the embodiment, a high damping force on the contraction side of the front wheel suspension system 150 and a high damping force on the expansion side of the rear wheel suspension system 180 are set in the diving suppression processing. However, only a high damping force on the contraction side of the front wheel suspension system 150 may be set or only a high damping force on the expansion side of the rear wheel suspension system 180 may be set in the diving suppression processing.

Reference is made herein to contraction and expansion of suspension system, which assume provision of linear damping arrangements. Of course the invention also has application in suspension systems provided with non-linear dampers, such as rotary dampers, and the terms "expansion" and "contraction" are intended to encompass the behaviour of such non-linear dampers in response to squat and dive inducing forces.

Description of Reference Numerals and Symbols

    10: motorcycle (vehicle)
    19: front wheel
    26: rear wheel
    28: engine unit (engine)
    41: handlebar
    41R: right grip
    42: accelerator input sensor
    46: throttle valve
    47: throttle
    50: throttle angle sensor (throttle angle detection apparatus)
    69: vehicle speed sensor
    100: suspension controller

105: damping force map selection module (selection device)
106: damping force map storage module (storage device)
107: opening/shutting threshold setting module (second threshold setting device, fourth threshold setting device)
108: opening/shutting speed threshold setting module (first threshold setting device, third threshold setting device)
109: threshold comparison module
110: additional damping force setting module
111: damping force determination module (squat suppression device, diving suppression device)
112: throttle speed change calculation module (opening speed calculation device, shutting speed calculation device)
150: front wheel side suspension system
160, 190: stroke sensor
180: rear wheel side suspension system
a1, a2, a3: opening speed threshold (first threshold)
b1, b2, b3: angle threshold (second threshold)
D1: first additional damping force
D2: second additional damping force
D3: third additional damping force
D4: fourth additional damping force
DC: fixed damping force
A, B: first damping force map
C, D: second damping force map

**Claims**

1. A suspension controller (100) adapted to be mounted on a vehicle (10) having:

an engine (28);
a throttle valve (46) for adjusting the engine air intake;
a throttle setting detection apparatus (50);
a vehicle speed sensor (69) for detecting vehicle speed;
a front wheel (19);
a rear wheel (26);
a front wheel suspension system (150); and
a rear wheel side suspension system (180) ;

the suspension controller (100) for controlling damping forces on expansion and on contraction of the front wheel suspension system (150) and the rear wheel suspension system (180), the controller comprising:

an opening speed determination device (112) for determining an opening speed of the throttle valve (46) on the basis of an output of the throttle setting detection apparatus (50);
a squat suppression device (111) for increasing either or both of the damping force on expansion of the front wheel suspension system (150) and the damping force on contraction of the rear wheel suspension system (180) when the opening speed determined by the opening speed determination device (112) is equal to or higher than a first threshold (a1, a2, a3); **characterized in that** the controller comprises:

a first threshold setting device (108) for setting the first threshold (a1, a2, a3) corresponding to the vehicle speed detected by the vehicle speed sensor (69), the vehicle speed being zero or more.

2. The suspension controller (100) according to Claim 1, wherein the first threshold setting device (108) sets the first threshold(a1, a2, a3) as a smaller value as the vehicle speed detected by the vehicle speed sensor (69) becomes lower.

3. The suspension controller (100) according to Claim 1 or 2, wherein the squat suppression device (111) increases either or both of the damping force on expansion of the front wheel suspension system (150) and the damping force on contraction of the rear wheel suspension system (180) when the opening speed determined by the opening speed determination device (112) is equal to or higher than the first threshold (a1, a2, a3) and the throttle angle detected by the throttle setting detection apparatus (50) is equal to or higher than a second threshold (b1, b2, b3).

4. The suspension controller (100) according to Claim 3, further comprising a second threshold setting device (107) for setting the second threshold (b1, b2, b3) corresponding to the vehicle speed detected by the vehicle speed sensor (69).

5. The suspension controller according to Claim 4, wherein the second threshold setting device (107) sets the second threshold (b1, b2, b3) as a smaller value as the vehicle speed detected by the vehicle speed sensor (69) becomes lower.

6. The suspension controller (100) according to any of Claims 1 to 5, wherein the squat suppression device (111) executes either or both of addition of a first additional damping force (D1) to the damping force on expansion of the front wheel suspension system (150) corresponding to the opening speed and addition of a second additional damping force (D2) to the damping force on the contraction of the rear wheel suspension system (180) corresponding to the opening speed.

7. The suspension controller (100) according to Claim 6, wherein the first additional damping force (D1) and the second additional damping force (D2) are set as higher values as the opening speed of the throttle valve (46) becomes higher.

8. The suspension controller (100) according to Claim 7, wherein the first additional damping force (D1) and the second additional damping force (D2) are set as values generally in proportion to the opening speed of the throttle valve (46).

9. The suspension controller (100) according to Claim 6, 7 or 8, wherein the suppression device (111) terminates addition of either or both of the additional damping forces (D1, D2) if the opening speed of the throttle valve (46) becomes less than the first threshold (a1, a2, a3) while either or both of the first additional damping force and the second additional damping force are being added.

10. The suspension controller (100) according to Claim 9, wherein the squat suppression device (111) gradually reduces the increased damping force on expansion of the front wheel suspension system (150) or the damping force on contraction of the rear wheel suspension system (180) when terminating addition of either or both of the additional damping forces (D1, D2).

11. The suspension controller (100) according to Claim 6, 7, 8, 9 or 10, wherein the squat suppression device (111) further adds a predefined fixed damping force (DC) when adding the first additional damping force (D1) or the second additional damping force (D2).

12. The suspension controller (100) according to any of Claims 6 to 11, further comprising:

    a storage device (106) for storing a multiplicity of first damping force maps for regulating the relation between the opening speed of the throttle valve (46) and the first additional damping force (D1) or the relation between the opening speed of the throttle valve (46) and the second additional damping force (D2); and
    a selection device (105) for selecting one of the first damping force maps from a multiplicity of types of the first damping force maps stored in the storage device (106) corresponding to the vehicle speed detected by the vehicle speed sensor (69).

13. A suspension controller (100) adapted to be mounted on a vehicle (10) having:

    an engine (28);
    a throttle valve (46) for adjusting the engine air intake;
    a throttle setting detection apparatus (50);
    a vehicle speed sensor (69) for detecting a vehicle speed;
    a front wheel (19);
    a rear wheel (26);
    a front wheel suspension system (150); and
    a rear wheel suspension system (180);

    the suspension controller (100) for controlling damping forces on expansion and on contraction of the front wheel suspension system (150) and the rear wheel suspension system (180), the controller comprising:

    a shutting speed determination device (112) for determining a shutting speed of the throttle valve (46) on the basis of an output of the throttle setting detection apparatus (50);
a diving suppression device (111) for increasing either or both of the damping force on contraction of the front wheel suspension system (150) and the damping force on expansion of the rear wheel suspension system (180) when the shutting speed determined by the shutting speed determination device (112) is equal to or higher than a third threshold; **characterized in that** the controller comprises
a third threshold setting device (108) for setting the third threshold corresponding to the vehicle speed detected by the vehicle speed sensor (69), the vehicle speed being zero or more.

14. The suspension controller (100) according to Claim 13, wherein the third threshold setting device (108) sets the third threshold as a smaller value as the vehicle speed detected by the vehicle speed sensor (69) becomes lower.

15. The suspension controller (100) according to Claim 13, wherein the diving suppression device (111) executes either or both of addition of a third additional damping force (D3) to the damping force on contraction of the front wheel suspension system (150) corresponding to the shutting speed and addition of a fourth additional damping force (D4) to the damping force on expansion of the rear wheel suspension system (180) corresponding to the shutting speed.

16. The suspension controller (100) according to Claim 15, wherein the third additional damping force (D3) and the fourth additional damping force (D4) are set as higher values as the shutting speed of the throttle valve (46) becomes higher.

17. The suspension controller (100) according to Claim 16, wherein the third additional damping force (D3) and the fourth additional damping force (D4) are set as values generally in proportion to the shutting speed of the throttle valve (46).

18. The suspension controller (100) according to Claim 15, wherein the diving suppression device (111) terminates addition of either or both of the additional damping forces (D3, D4) if the shutting speed of the throttle valve (46) becomes less than the third threshold while either or both of the third additional damping force (D3) and the fourth additional damping forces (D4) are added.

19. The suspension controller (100) according to Claim 18, wherein the diving suppression device (111) gradually reduces the increased damping force on contraction of the front wheel suspension system (150) or the damping force on expansion of the rear wheel suspension system (180) when terminating addition of either or both of the additional damping forces (D3, D4).

20. The suspension controller (100) according to Claim 15, 16, 17, 18 or 19, wherein the diving suppression device (111) further adds a predefined fixed damping force (DC) when adding the third additional damping force (D3) or the fourth additional damping force (D4).

21. The suspension controller (100) according to Claim 15, 16, 17, 18, 19 or 20, further comprising:

a storage device (106) for storing a multiplicity of second damping force maps for regulating the relation between the shutting speed of the throttle valve (46) and the third additional damping force (D3) or the relation between the shutting speed of the throttle (46) and the fourth additional damping force (D4); and
a selection device (105) for selecting one of the second damping force maps from a multiplicity of types of the second damping force maps stored in the storage device corresponding to the vehicle speed detected by the vehicle speed sensor (69).

22. The suspension controller (100) according to claim 1, wherein:

the throttle valve (46) is for adjusting the amount of an air intake of the engine (28);
the throttle setting detection apparatus comprises a throttle angle detection apparatus (50) for detecting an angle of the throttle valve (46);
the front wheel suspension system (150) is for absorbing an impact on the front wheel; and
the rear wheel suspension system (180) is for absorbing an impact on the rear wheel; and
the suspension controller (100) is for controlling each of damping forces on an expansion side and on a contraction side in the front wheel suspension system (150) and in the rear wheel suspension system (180), and wherein the opening speed calculation device (112) calculates the opening speed of the throttle valve (46) on the basis of a detection result of the throttle angle detection apparatus (50);

the squat suppression device (111) is for setting either or both of the damping force on the expansion side of the front wheel side suspension system (150) and the damping force on the contraction side of the rear wheel suspension device (180) higher than the damping force of a time when the opening speed is less than the first threshold (a1, a2, a3) while the opening speed calculated by the opening speed calculation device (112) is equal to or higher than the first threshold (a1, a2, a3).

23. The suspension controller (100) according to claim 13, wherein:

the throttle valve (46) is for adjusting the amount of an air intake of the engine (28);
the throttle setting detection apparatus comprises throttle angle detection apparatus (50) for detecting an angle of the throttle valve (46);
the front wheel suspension system (150) is for absorbing an impact on the front wheel (19); and
the rear wheel suspension system (180) is for absorbing an impact on the rear wheel (26);
the suspension controller (100) is for controlling each of damping forces on an expansion side and on a contraction side in the front wheel suspension system (150) and in the rear wheel suspension system (180); and wherein
the shutting speed calculation device (112) is for calculating the shutting speed of the throttle valve (46) on the basis of a detection result of the throttle angle detection apparatus (50);
the diving suppression device (111) is for setting either or both of the damping force on the contraction side of the front wheel side suspension system (150) and the damping force on the expansion side of the rear wheel suspension system (180) higher than the damping force of a time when the shutting speed is less than the third threshold while the shutting speed calculated by the shutting speed calculation device (112) is equal to or higher than the third threshold.

24. A vehicle (10), comprising the suspension controller (100) according to any preceding Claim.

25. A vehicle (10) according to Claim 24, wherein the vehicle is a straddle type vehicle.

26. A straddle type vehicle according to Claim 25, wherein the vehicle is a motorcycle.

27. A method of controlling the front wheel suspension system and the rear wheel suspension system of a vehicle, the method comprising:

increasing one or both of the damping force on expansion of the front wheel suspension system and the damping force on contraction of the rear wheel suspension system when the opening speed of the vehicle engine throttle is equal to or higher than a first threshold; and
setting the first threshold corresponding to the vehicle speed, the vehicle speed being zero or more.

28. A method of controlling the front wheel suspension system and the rear wheel suspension system of a vehicle, the method comprising:

increasing one or both of the damping force on contraction of the front wheel suspension system and the damping force on expansion of the rear wheel suspension system when the shutting speed of the vehicle engine throttle is equal to or higher than a third threshold; and
setting the third threshold corresponding to the vehicle speed, the vehicle speed being zero or more.

**Patentansprüche**

1. Aufhängungsregler (100), der dafür eingerichtet ist, an einem Fahrzeug (10) angebracht zu werden, das Folgendes aufweist:

einen Motor (28),
ein Drosselventil (46) zum Einstellen der Motor-Luftansaugung,
eine Drosseleinstellungserfassungsvorrichtung (50),
einen Fahrzeuggeschwindigkeitssensor (69) zum Erfassen der Fahrzeuggeschwindigkeit,
ein Vorderrad (19),
ein Hinterrad (26),
ein Vorderrad-Aufhängungssystem (150) und

ein Hinterrad-Aufhängungssystem (180),
wobei der Aufhängungsregler (100) zum Regeln von Dämpfungskräften bei der Expansion und bei der Kontraktion des Vorderrad-Aufhängungssystems (150) und des Hinterrad-Aufhängungssystems (180) dient, wobei der Regler Folgendes umfasst:

eine Öffnungsgeschwindigkeitsbestimmungseinrichtung (112) zum Bestimmen einer Öffnungsgeschwindigkeit des Drosselventils (46) auf der Grundlage einer Ausgabe der Drosseleinstellungserfassungsvorrichtung (50),
eine Erweichungsunterdrückungseinrichtung (111) zum Steigern einer oder beider von der Dämpfungskraft bei der Expansion des Vorderrad-Aufhängungssystems (150) und der Dämpfungskraft bei der Kontraktion des Hinterrad-Aufhängungssystems (180), wenn die durch die Öffnungsgeschwindigkeitsbestimmungseinrichtung (112) bestimmte Öffnungsgeschwindigkeit gleich einem ersten Schwellenwert (a1, a2, a3) oder höher als derselbe ist, **dadurch gekennzeichnet, dass** der Regler Folgendes umfasst:

eine erste Schwellenwert-Einstelleinrichtung (108) zum Einstellen des ersten Schwellenwertes (a1, a2, a3) entsprechend der durch den Fahrzeuggeschwindigkeitssensor (69) erfassten Fahrzeuggeschwindigkeit, wobei die Fahrzeuggeschwindigkeit null oder mehr beträgt.

2. Aufhängungsregler (100) nach Anspruch 1, wobei die erste Schwellenwert-Einstelleinrichtung (108) den ersten Schwellenwert (a1, a2, a3) als einen kleineren Wert einstellt, wenn die durch den Fahrzeuggeschwindigkeitssensor (69) erfasste Fahrzeuggeschwindigkeit niedriger wird.

3. Aufhängungsregler (100) nach Anspruch 1 oder 2, wobei die Erweichungsunterdrückungseinrichtung (111) eine oder beide von der Dämpfungskraft bei der Expansion des Vorderrad-Aufhängungssystems (150) und der Dämpfungskraft bei der Kontraktion des Hinterrad-Aufhängungssystems (180) steigert, wenn die durch die Öffnungsgeschwindigkeitsbestimmungseinrichtung (112) bestimmte Öffnungsgeschwindigkeit gleich einem ersten Schwellenwert (a1, a2, 3a) oder höher als derselbe ist und der durch die Drosseleinstellungserfassungsvorrichtung (50) erfasste Drosselwinkel gleich einem zweiten Schwellenwert (b1, b2, b3) oder höher als derselbe ist.

4. Aufhängungsregler (100) nach Anspruch 3, der ferner eine zweite Schwellenwert-Einstelleinrichtung (107) zum Einstellen des zweiten Schwellenwertes (b1, b2, b3) entsprechend der durch den Fahrzeuggeschwindigkeitssensor (69) erfassten Fahrzeuggeschwindigkeit umfasst.

5. Aufhängungsregler (100) nach Anspruch 4, wobei die zweite Schwellenwert-Einstelleinrichtung (107) den zweiten Schwellenwert (b1, b2, b3) als einen kleineren Wert einstellt, wenn die durch den Fahrzeuggeschwindigkeitssensor (69) erfasste Fahrzeuggeschwindigkeit niedriger wird.

6. Aufhängungsregler (100) nach einem der Ansprüche 1 bis 5, wobei die Erweichungsunterdrückungseinrichtung (111) eines oder beides von dem Hinzufügen einer ersten zusätzlichen Dämpfungskraft (D1) zu der Dämpfungskraft bei der Expansion des Vorderrad-Aufhängungssystems (150) entsprechend der Öffnungsgeschwindigkeit und dem Hinzufügen einer zweiten zusätzlichen Dämpfungskraft (D2) zu der Dämpfungskraft bei der Kontraktion des Hinterrad-Aufhängungssystems (180) entsprechend der Öffnungsgeschwindigkeit umfasst.

7. Aufhängungsregler (100) nach Anspruch 6, wobei die erste zusätzliche Dämpfungskraft (D1) und die zweite zusätzlichen Dämpfungskraft (D2) als höhere Werte eingestellt werden, wenn die Öffnungsgeschwindigkeit des Drosselventils (46) höher wird.

8. Aufhängungsregler (100) nach Anspruch 7, wobei die erste zusätzliche Dämpfungskraft (D1) und die zweite zusätzliche Dämpfungskraft (D2) als Werte, im Allgemeinen im Verhältnis zu der Öffnungsgeschwindigkeit des Drosselventils (46) eingestellt werden.

9. Aufhängungsregler (100) nach Anspruch 6, 7 oder 8, wobei die Unterdrückungseinrichtung (111) das Hinzufügen einer oder beider von den zusätzlichen Dämpfungskräften (D1, D2) beendet, falls die Öffnungsgeschwindigkeit des Drosselventils (46) geringer wird als der erste Schwellenwert (a1, a2, 3a), während eine oder beide von der ersten zusätzlichen Dämpfungskraft und der zweiten zusätzlichen Dämpfungskraft hinzugefügt werden.

10. Aufhängungsregler (100) nach Anspruch 9, wobei die Erweichungsunterdrückungseinrichtung (111) allmählich die gesteigerte Dämpfungskraft bei der Expansion des Vorderrad-Aufhängungssystems (150) und der Dämpfungskraft bei der Kontraktion des Hinterrad-Aufhängungssystems (180) verringert, wenn das Hinzufügen einer oder beider von den zusätzlichen Dämpfungskräften (D1, D2) festgestellt wird.

11. Aufhängungsregler (100) nach Anspruch 6, 7, 8, 9 oder 10, wobei die Erweichungsunterdrückungseinrichtung (111) ferner eine vorbestimmte feste Dämpfungskraft (DC) hinzufügt, wenn die erste zusätzliche Dämpfungskraft (D1) oder die zweite Dämpfungskraft (D2) hinzugefügt werden.

12. Aufhängungsregler (100) nach einem der Ansprüche 6 bis 11, der ferner Folgendes umfasst:

   eine Speichereinrichtung (106) zum Speichern mehrerer erster Dämpfungskraftabbildungen zum Regulieren der Beziehung zwischen der Öffnungsgeschwindigkeit des Drosselventils (46) und der ersten zusätzlichen Dämpfungskraft (D1) oder der Beziehung zwischen der Öffnungsgeschwindigkeit des Drosselventils (46) und der zweiten zusätzlichen Dämpfungskraft (D2), und
   eine Auswahleinrichtung (105) zum Auswählen einer der ersten Dämpfungskraftabbildungen von einer Vielzahl von Typen der in der Speichereinrichtung (106) gespeicherten ersten Dämpfungskraftabbildungen entsprechend der durch den Fahrzeuggeschwindigkeitssensor (69) erfassten Fahrzeuggeschwindigkeit.

13. Aufhängungsregler (100), der dafür eingerichtet ist, an einem Fahrzeug (10) angebracht zu werden, das Folgendes aufweist:

   einen Motor (28),
   ein Drosselventil (46) zum Einstellen der Motor-Luftansaugung,
   eine Drosseleinstellungserfassungsvorrichtung (50),
   einen Fahrzeuggeschwindigkeitssensor (69) zum Erfassen der Fahrzeuggeschwindigkeit,
   ein Vorderrad (19),
   ein Hinterrad (26),
   ein Vorderrad-Aufhängungssystem (150) und
   ein Hinterrad-Aufhängungssystem (180),
   wobei der Aufhängungsregler (100) zum Regeln von Dämpfungskräften bei der Expansion und bei der Kontraktion des Vorderrad-Aufhängungssystems (150) und des Hinterrad-Aufhängungssystems (180) dient, wobei der Regler Folgendes umfasst:

      eine Verschlussgeschwindigkeitsbestimmungseinrichtung (112) zum Bestimmen einer Verschlussgeschwindigkeit des Drosselventils (46) auf der Grundlage einer Ausgabe der Drosseleinstellungserfassungsvorrichtung (50),
      eine Eintauchunterdrückungseinrichtung (111) zum Steigern einer oder beider von der Dämpfungskraft bei der Kontraktion des Vorderrad-Aufhängungssystems (150) und der Dämpfungskraft bei der Expansion des Hinterrad-Aufhängungssystems (180), wenn die durch die Verschlussgeschwindigkeitsbestimmungseinrichtung (112) bestimmte Verschlussgeschwindigkeit gleich einem dritten Schwellenwert oder höher als derselbe ist, **dadurch gekennzeichnet, dass** der Regler Folgendes umfasst:

         eine dritte Schwellenwert-Einstelleinrichtung (108) zum Einstellen des dritten Schwellenwertes entsprechend der durch den Fahrzeuggeschwindigkeitssensor (69) erfassten Fahrzeuggeschwindigkeit, wobei die Fahrzeuggeschwindigkeit null oder mehr beträgt.

14. Aufhängungsregler (100) nach Anspruch 13, wobei die dritte Schwellenwert-Einstelleinrichtung (108) den dritten Schwellenwert als einen kleineren Wert einstellt, wenn die durch den Fahrzeuggeschwindigkeitssensor (69) erfasste Fahrzeuggeschwindigkeit niedriger wird.

15. Aufhängungsregler (100) nach Anspruch 13, wobei die Eintauchunterdrückungseinrichtung (111) eines oder beides von dem Hinzufügen einer dritten zusätzlichen Dämpfungskraft (D3) zu der Dämpfungskraft bei der Kontraktion des Vorderrad-Aufhängungssystems (150) entsprechend der Verschlussgeschwindigkeit und dem Hinzufügen einer vierten zusätzlichen Dämpfungskraft (D4) zu der Dämpfungskraft bei der Expansion des Hinterrad-Aufhängungssystems (180) entsprechend der Verschlussgeschwindigkeit umfasst.

16. Aufhängungsregler (100) nach Anspruch 15, wobei die dritte zusätzliche Dämpfungskraft (D3) und die vierte zusätzlichen Dämpfungskraft (D4) als höhere Werte eingestellt werden, wenn die Verschlussgeschwindigkeit des Drosselventils (46) höher wird.

17. Aufhängungsregler (100) nach Anspruch 16, wobei die dritte zusätzliche Dämpfungskraft (D3) und die vierte zusätzlichen Dämpfungskraft (D4) als Werte, im Allgemeinen im Verhältnis zu der Verschlussgeschwindigkeit des Drosselventils (46) eingestellt werden.

18. Aufhängungsregler (100) nach Anspruch 15, wobei die Eintauchunterdrückungseinrichtung (111) das Hinzufügen einer oder beider von den zusätzlichen Dämpfungskräften (D3, D4) beendet, falls die Verschlussgeschwindigkeit des Drosselventils (46) geringer wird als der dritte Schwellenwert, während eine oder beide von der dritten zusätzlichen Dämpfungskraft (D3) und der vierten zusätzlichen Dämpfungskraft (D4) hinzugefügt werden.

19. Aufhängungsregler (100) nach Anspruch 18, wobei die Eintauchunterdrückungseinrichtung (111) allmählich die gesteigerte Dämpfungskraft bei der Kontraktion des Vorderrad-Aufhängungssystems (150) und der Dämpfungskraft bei der Expansion des Hinterrad-Aufhängungssystems (180) verringert, wenn das Hinzufügen einer oder beider von den zusätzlichen Dämpfungskräften (D3, D4) festgestellt wird.

20. Aufhängungsregler (100) nach Anspruch 15, 16, 17, 18, oder 19, wobei die Eintauchunterdrückungseinrichtung (111) ferner eine vorbestimmte feste Dämpfungskraft (DC) hinzufügt, wenn die dritte zusätzliche Dämpfungskraft (D3) oder die vierte Dämpfungskraft (D4) hinzugefügt werden.

21. Aufhängungsregler (100) nach Anspruch 15, 16, 17, 18, 19 oder 20, der ferner Folgendes umfasst:

eine Speichereinrichtung (106) zum Speichern mehrerer zweiter Dämpfungskraftabbildungen zum Regulieren der Beziehung zwischen der Verschlussgeschwindigkeit des Drosselventils (46) und der dritten zusätzlichen Dämpfungskraft (D3) oder der Beziehung zwischen der Öffnungsgeschwindigkeit des Drosselventils (46) und der vierten zusätzlichen Dämpfungskraft (D4), und

eine Auswahleinrichtung (105) zum Auswählen einer der zweiten Dämpfungskraftabbildungen von einer Vielzahl von Typen der in der Speichereinrichtung gespeicherten zweiten Dämpfungskraftabbildungen entsprechend der durch den Fahrzeuggeschwindigkeitssensor (69) erfassten Fahrzeuggeschwindigkeit.

22. Aufhängungsregler (100) nach Anspruch 1, wobei:

das Drosselventil (46) zum Einstellen einer Luftansaugung des Motors (28) dient,
die Drosseleinstellungserfassungsvorrichtung eine Drosselwinkel-Erfassungseinrichtung (50) zum Erfassen eines Winkels des Drosselventil (46) umfasst,
das Vorderrad-Aufhängungssystem (150) zum Absorbieren eines Stoßes an dem Vorderrad dient und
das Hinterrad-Aufhängungssystem (180) zum Absorbieren eines Stoßes an dem Hinterrad dient,
der Aufhängungsregler (100) zum Regeln jeder der Dämpfungskräfte auf einer Expansionsseite und auf einer Kontraktionsseite in dem Vorderrad-Aufhängungssystem (150) und in dem Hinterrad-Aufhängungssystem (180) dient und wobei
die Öffnungsgeschwindigkeitsberechnungseinrichtung (112) die Öffnungsgeschwindigkeit des Drosselventils (46) auf der Grundlage eines Erfassungsergebnisses der Drosselwinkel-Erfassungseinrichtung (50) berechnet,
die Erweichungsunterdrückungseinrichtung (111) zum Einstellen einer oder beider von der Dämpfungskraft auf der Expansionsseite des Vorderrad-Aufhängungssystems (150) und der Dämpfungskraft auf der Kontraktionsseite des Hinterrad-Aufhängungssystems (180) höher als die Dämpfungskraft einer Zeit, wenn die Öffnungsgeschwindigkeit geringer ist als der erste Schwellenwert (a1, a2, a3), während die durch die Öffnungsgeschwindigkeitsberechnungseinrichtung (112) berechnete Öffnungsgeschwindigkeit gleich dem ersten Schwellenwert (a1, a2, a3) oder höher als derselbe ist, dient.

23. Aufhängungsregler (100) nach Anspruch 13, wobei:

das Drosselventil (46) zum Einstellen einer Luftansaugung des Motors (28) dient,
die Drosseleinstellungserfassungsvorrichtung eine Drosselwinkel-Erfassungseinrichtung (50) zum Erfassen eines Winkels des Drosselventil (46) umfasst,
das Vorderrad-Aufhängungssystem (150) zum Absorbieren eines Stoßes an dem Vorderrad (19) dient und
das Hinterrad-Aufhängungssystem (180) zum Absorbieren eines Stoßes an dem Hinterrad (26) dient,
der Aufhängungsregler (100) zum Regeln jeder der Dämpfungskräfte auf einer Expansionsseite und auf einer Kontraktionsseite in dem Vorderrad-Aufhängungssystem (150) und in dem Hinterrad-Aufhängungssystem (180) dient und wobei
die Verschlussgeschwindigkeitsberechnungseinrichtung (112) zum Berechnen der Verschlussgeschwindigkeit des Drosselventils (46) auf der Grundlage eines Erfassungsergebnisses der Drosselwinkel-Erfassungseinrichtung (50) dient,
die Eintauchunterdrückungseinrichtung (111) zum Einstellen einer oder beider von der Dämpfungskraft auf der Kontraktionsseite des Vorderrad-Aufhängungssystems (150) und der Dämpfungskraft auf der Expansionsseite des Hinterrad-Aufhängungssystems (180) höher als die Dämpfungskraft einer Zeit, wenn die Verschlussgeschwindigkeit geringer ist als der dritte Schwellenwert, während die durch die Verschlussgeschwindigkeitsberechnungseinrichtung (112) berechnete Verschlussgeschwindigkeit gleich dem dritten Schwellenwert oder höher als derselbe ist, dient.

**24.** Fahrzeug (10), das den Aufhängungsregler (100) nach einem der vorhergehenden Ansprüche umfasst.

**25.** Fahrzeug (10) nach Anspruch 24, wobei das Fahrzeug ein Reitsitzfahrzeug ist.

**26.** Reitsitzfahrzeug nach Anspruch 25, wobei das Fahrzeug ein Motorrad ist.

**27.** Verfahren zum Regeln des Vorderrad-Aufhängungssystems und des Hinterrad-Aufhängungssystems eines Fahrzeugs, wobei das Verfahren Folgendes umfasst:

das Steigern einer oder beider von der Dämpfungskraft bei der Expansion des Vorderrad-Aufhängungssystems und der Dämpfungskraft bei der Kontraktion des Hinterrad-Aufhängungssystems, wenn die Öffnungsgeschwindigkeit der Fahrzeug-Motordrossel gleich einem ersten Schwellenwert oder höher als derselbe ist, und
das Einstellen des ersten Schwellenwertes entsprechend der Fahrzeuggeschwindigkeit, wobei die Fahrzeuggeschwindigkeit null oder mehr beträgt.

**28.** Verfahren zum Regeln des Vorderrad-Aufhängungssystems und des Hinterrad-Aufhängungssystems eines Fahrzeugs, wobei das Verfahren Folgendes umfasst:

das Steigern einer oder beider von der Dämpfungskraft bei der Kontraktion des Vorderrad-Aufhängungssystems und der Dämpfungskraft bei der Expansion des Hinterrad-Aufhängungssystems, wenn die Verschlussgeschwindigkeit der Fahrzeug-Motordrossel gleich einem dritten Schwellenwert oder höher als derselbe ist, und
das Einstellen des dritten Schwellenwertes entsprechend der Fahrzeuggeschwindigkeit, wobei die Fahrzeuggeschwindigkeit null oder mehr beträgt.

## Revendications

**1.** Dispositif de commande de suspension (100) conçu pour être monté sur un véhicule (10) présentant :

un moteur (28) ;
un papillon des gaz (46) permettant d'ajuster l'entrée d'air moteur ;
un appareil de détection de réglage des gaz (50) ;
un capteur de vitesse de véhicule (69) permettant de détecter une vitesse de véhicule ;
une roue avant (19) ;
une roue arrière (26) ;
un système de suspension de roue avant (150) ; et
un système de suspension de roue arrière (180) ;
le dispositif de commande de suspension (100) permettant de commander des forces d'amortissement lors d'une expansion et d'une contraction du système de suspension de roue avant (150) et du système de suspension de roue arrière (180), le dispositif de commande comprenant :

un dispositif de détermination de vitesse d'ouverture (112) permettant de déterminer une vitesse d'ouverture du papillon des gaz (46) sur la base d'une sortie de l'appareil de détection de réglage des gaz (50) ;
un dispositif de suppression de cabré (111) permettant d'augmenter l'une ou l'autre ou les deux parmi la force d'amortissement lors d'une expansion du système de suspension de roue avant (150) et la force d'amortissement lors d'une contraction du système de suspension de roue arrière (180) lorsque la vitesse d'ouverture déterminée par le dispositif de détermination de vitesse d'ouverture (112) est supérieure ou égale à un premier seuil (a1, a2, a3) ; **caractérisé en ce que** le dispositif de commande comprend :

**EP 1 930 233 B1**

un premier dispositif de définition de seuil (108) permettant de définir le premier seuil (a1, a2, a3) en fonction de la vitesse de véhicule détectée par le capteur de vitesse de véhicule (69), la vitesse de véhicule étant supérieure ou égale à zéro.

2. Dispositif de commande de suspension (100) selon la revendication 1, dans lequel le premier dispositif de définition de seuil (108) définit le premier seuil (a1, a2, a3) en tant que valeur plus petite à mesure que la vitesse de véhicule détectée par le capteur de vitesse de véhicule (69) diminue.

3. Dispositif de commande de suspension (100) selon la revendication 1 ou 2, dans lequel le dispositif de suppression de cabré (111) augmente l'une ou l'autre ou les deux parmi la force d'amortissement lors d'une expansion du système de suspension de roue avant (150) et la force d'amortissement lors d'une contraction du système de suspension de roue arrière (180) lorsque la vitesse d'ouverture déterminée par le dispositif de détermination de vitesse d'ouverture (112) est supérieure ou égale au premier seuil (a1, a2, a3) et l'angle de papillon détecté par l'appareil de détection de réglage des gaz (50) est supérieur ou égal à un deuxième seuil (b1, b2, b3).

4. Dispositif de commande de suspension (100) selon la revendication 3, comprenant en outre un deuxième dispositif de définition de seuil (107) permettant de définir le deuxième seuil (b1, b2, b3) en fonction de la vitesse de véhicule détectée par le capteur de vitesse de véhicule (69).

5. Dispositif de commande de suspension selon la revendication 4, dans lequel le deuxième dispositif de définition de seuil (107) définit le deuxième seuil (b1, b2, b3) en tant que valeur plus petite à mesure que la vitesse de véhicule détectée par le capteur de vitesse de véhicule (69) diminue.

6. Dispositif de commande de suspension (100) selon l'une quelconque des revendications 1 à 5, dans lequel le dispositif de suppression de cabré (111) exécute l'une ou l'autre ou les deux parmi une addition d'une première force d'amortissement (D1) supplémentaire à la force d'amortissement lors de l'expansion du système de suspension de roue avant (150) en fonction de la vitesse d'ouverture et une addition d'une deuxième force d'amortissement (D2) supplémentaire à la force d'amortissement lors de la contraction du système de suspension de roue arrière (180) en fonction de la vitesse d'ouverture.

7. Dispositif de commande de suspension (100) selon la revendication 6, dans lequel la première force d'amortissement (D1) supplémentaire et la deuxième force d'amortissement (D2) supplémentaire sont définies en tant que valeurs supérieures à mesure que la vitesse d'ouverture du papillon des gaz (46) augmente.

8. Dispositif de commande de suspension (100) selon la revendication 7, dans lequel la première force d'amortissement (D1) supplémentaire et la deuxième force d'amortissement (D2) supplémentaire sont définies en tant que valeurs essentiellement proportionnelles à la vitesse d'ouverture du papillon des gaz (46).

9. Dispositif de commande de suspension (100) selon l'une quelconque des revendications 6, 7 ou 8, dans lequel le dispositif de suppression (111) termine une addition de l'une ou l'autre ou des deux forces d'amortissement (D1 ; D2) supplémentaires si la vitesse d'ouverture du papillon des gaz (46) devient inférieure au premier seuil (a1, a2, a3) tandis que l'une ou l'autre ou les deux parmi la première force d'amortissement supplémentaire et la deuxième force d'amortissement supplémentaire sont en cours d'addition.

10. Dispositif de commande de suspension (100) selon la revendication 9, dans lequel le dispositif de suppression de cabré (111) réduit progressivement la force d'amortissement augmentée lors d'une expansion du système de suspension de roue avant (150) ou la force d'amortissement lors d'une contraction du système de suspension de roue arrière (180) lorsqu'il termine une addition de l'une ou l'autre ou des deux forces d'amortissement (D1, D2) supplémentaires.

11. Dispositif de commande de suspension (100) selon l'une quelconque des revendications 6, 7, 8, 9 ou 10, dans lequel le dispositif de suppression de cabré (111) additionne en outre une force d'amortissement fixe prédéfinie (DC) lors de l'étape consistant à additionner la première force d'amortissement (D1) supplémentaire ou la deuxième force d'amortissement (D2) supplémentaire.

12. Dispositif de commande de suspension (100) selon l'une quelconque des revendications 6 à 11, comprenant en outre :

un dispositif de stockage (106) permettant de stocker une pluralité de premières cartes de force d'amortissement en vue d'une régulation de la relation entre la vitesse d'ouverture du papillon des gaz (46) et la première force d'amortissement (D1) supplémentaire ou de la relation entre la vitesse d'ouverture du papillon des gaz (46) et la deuxième force d'amortissement (D2) supplémentaire ; et

un dispositif de sélection (105) permettant de sélectionner une des premières cartes de force d'amortissement parmi une pluralité de types des premières cartes de force d'amortissement stockées dans le dispositif de stockage (106) en fonction de la vitesse de véhicule détectée par le capteur de vitesse de véhicule (69).

**13.** Dispositif de commande de suspension (100) conçu pour être monté sur un véhicule (10) présentant :

un moteur (28) ;
un papillon des gaz (46) permettant d'ajuster l'entrée d'air moteur ;
un appareil de détection de réglage des gaz (50) ;
un capteur de vitesse de véhicule (69) permettant de détecter une vitesse de véhicule ;
une roue avant (19) ;
une roue arrière (26) ;
un système de suspension de roue avant (150) ; et
un système de suspension de roue arrière (180) ;
le dispositif de commande de suspension (100) permettant de commander des forces d'amortissement lors d'une expansion et lors d'une contraction du système de suspension de roue avant (150) et du système de suspension de roue arrière (180), le dispositif de commande comprenant :

un dispositif de détermination de vitesse d'obturation (112) permettant de déterminer une vitesse d'obturation du papillon des gaz (46) sur la base d'une sortie de l'appareil de détection de réglage des gaz (50) ;
un dispositif de suppression de plongée (111) permettant d'augmenter l'une ou l'autre ou les deux parmi la force d'amortissement lors d'une contraction du système de suspension de roue avant (150) et la force d'amortissement lors d'une expansion du système de suspension de roue arrière (180) lorsque la vitesse d'obturation déterminée par le dispositif de détermination de vitesse d'obturation (112) est supérieure ou égale à un troisième seuil ; **caractérisé en ce que** le dispositif de commande comprend :

un troisième dispositif de définition de seuil (108) permettant de définir le troisième seuil en fonction de la vitesse de véhicule détectée par le capteur de vitesse de véhicule (69), la vitesse de véhicule étant supérieure ou égale à zéro.

**14.** Dispositif de commande de suspension (100) selon la revendication 13, dans lequel le troisième dispositif de définition de seuil (108) définit le troisième seuil en tant que valeur plus petite à mesure que la vitesse de véhicule détectée par le capteur de vitesse de véhicule (69) diminue.

**15.** Dispositif de commande de suspension (100) selon la revendication 13, dans lequel le dispositif de suppression de plongée (111) exécute l'une ou l'autre ou les deux parmi une addition d'une troisième force d'amortissement (D3) supplémentaire à la force d'amortissement lors d'une contraction du système de suspension de roue avant (150) en fonction de la vitesse d'obturation et une addition d'une quatrième force d'amortissement (D4) supplémentaire à la force d'amortissement lors d'une expansion du système de suspension de roue arrière (180) en fonction de la vitesse d'obturation.

**16.** Dispositif de commande de suspension (100) selon la revendication 15, dans lequel la troisième force d'amortissement (D3) supplémentaire et la quatrième force d'amortissement (D4) supplémentaire sont définies comme étant des valeurs supérieures à mesure que la vitesse d'obturation du papillon des gaz (46) augmente.

**17.** Dispositif de commande de suspension (100) selon la revendication 16, dans lequel la troisième force d'amortissement (D3) supplémentaire et la quatrième force d'amortissement (D4) supplémentaire sont définies comme étant des valeurs essentiellement proportionnelles à la vitesse d'obturation du papillon des gaz (46).

**18.** Dispositif de commande de suspension (100) selon la revendication 15, dans lequel le dispositif de suppression de plongée (111) termine une addition de l'une ou l'autre ou des deux forces d'amortissement (D3, D4) supplémentaires si la vitesse d'obturation du papillon des gaz (46) devient inférieure au troisième seuil pendant que l'une ou l'autre ou les deux parmi la troisième force d'amortissement (D3) supplémentaire et la quatrième force d'amortissement (D4) supplémentaire sont additionnées.

**19.** Dispositif de commande de suspension (100) selon la revendication 18, dans lequel le dispositif de suppression de plongée (111) réduit progressivement la force d'amortissement augmentée lors d'une contraction du système de suspension de roue avant (150) ou la force d'amortissement lors d'une expansion du système de suspension de roue arrière (180) lorsqu'il termine une addition de l'une ou l'autre ou des deux forces d'amortissement (D3, D4) supplémentaires.

**20.** Dispositif de commande de suspension (100) selon l'une quelconque des revendications 15, 16, 17, 18 ou 19, dans lequel le dispositif de suppression de plongée (111) additionne en outre une force d'amortissement fixe prédéfinie (DC) lorsqu'il additionne la troisième force d'amortissement (D3) supplémentaire ou la quatrième force d'amortissement (D4) supplémentaire.

**21.** Dispositif de commande de suspension (100) selon l'une quelconque des revendications 15, 16, 17, 18, 19 ou 20, comprenant en outre :

un dispositif de stockage (106) permettant de stocker une pluralité de deuxièmes cartes de force d'amortissement permettant de réguler la relation entre la vitesse d'obturation du papillon des gaz (46) et la troisième force d'amortissement (D3) supplémentaire ou la relation entre la vitesse d'obturation du papillon des gaz (46) et la quatrième force d'amortissement (D4) supplémentaire ; et

un dispositif de sélection (105) permettant de sélectionner une des deuxièmes cartes de force d'amortissement parmi une pluralité de types des deuxièmes cartes de force d'amortissement stockées dans le dispositif de stockage en fonction de la vitesse de véhicule détectée par le capteur de vitesse de véhicule (69).

**22.** Dispositif de commande de suspension (100) selon la revendication 1, dans lequel :

le papillon des gaz (46) sert à ajuster la quantité d'une entrée d'air du moteur (28) ;
l'appareil de détection de réglage des gaz comprend un appareil de détection de d'angle de papillon (50) permettant de détecter un angle du papillon des gaz (46) ;
le système de suspension de roue avant (150) sert à absorber un impact sur la roue avant ; et
le système de suspension de roue arrière (180) sert à absorber un impact sur la roue arrière ; et
le dispositif de commande de suspension (100) sert à commander chacune des forces d'amortissement sur un côté d'expansion et sur un côté de contraction du système de suspension de roue avant (150) et du système de suspension de roue arrière (180), et dans lequel
le dispositif de calcul de vitesse d'obturation (112) calcule la vitesse d'ouverture du papillon des gaz (46) sur la base d'un résultat de détection de l'appareil de détection d'angle de papillon (50) ;
le dispositif de suppression de cabré (111) sert à définir l'une ou l'autre ou les deux parmi la force d'amortissement sur le côté d'expansion du système de suspension de roue avant (150) et la force d'amortissement sur le côté de contraction du dispositif de suspension de roue arrière (180) afin qu'elle(s) soi(en)t supérieure(s) à la force d'amortissement d'un moment auquel la vitesse d'ouverture est inférieure au premier seuil (a1, a2, a3) tandis que la vitesse d'ouverture calculée par le dispositif de calcul de vitesse d'ouverture (112) est supérieure ou égale au premier seuil (a1, a2, a3).

**23.** Dispositif de commande de suspension (100) selon la revendication13, dans lequel :

le papillon des gaz (46) sert à ajuster la quantité d'une entrée d'air du moteur (28) ;
l'appareil de détection de réglage des gaz comprend un appareil de détection d'angle de papillon (50) permettant de détecter un angle du papillon des gaz (46) ;
le système de suspension de roue avant (150) sert à absorber un impact sur la roue avant (19) ; et
le système de suspension de roue arrière (180) sert à absorber un impact sur la roue arrière (26) ;
le dispositif de commande de suspension (100) sert à commander chacune des forces d'amortissement sur un côté d'expansion et sur un côté de contraction du système de suspension de roue avant (150) et du système de suspension de roue arrière (180) ; et dans lequel
le dispositif de calcul de vitesse d'obturation (112) sert à calculer la vitesse d'obturation du papillon des gaz (46) sur la base d'un résultat de détection de l'appareil de détection d'angle de papillon (50) ;
le dispositif de suppression de plongée (111) sert à définir l'une ou l'autre ou les deux parmi la force d'amortissement sur le côté de contraction du système de suspension de roue avant (150) et la force d'amortissement sur le côté expansion du système de suspension de roue arrière (180) afin qu'elle(s) soi(en)t supérieure(s) à la force d'amortissement d'un moment auquel la vitesse d'obturation est inférieure au troisième seuil tandis que la vitesse d'obturation calculée par le dispositif de calcul de vitesse d'obturation (112) est supérieure ou égale au troisième seuil.

**24.** Véhicule (10), comprenant le dispositif de commande de suspension (100) selon l'une quelconque des revendications précédentes.

**25.** Véhicule (10) selon la revendication 24, dans lequel le véhicule est un véhicule de type à enfourcher.

**26.** Véhicule de type à enfourcher selon la revendication 25, dans lequel le véhicule est une motocyclette.

**27.** Procédé de commande du système de suspension de roue avant et du système de suspension de roue arrière d'un véhicule, le procédé comprenant les étapes consistant à :

augmenter une ou les deux parmi la force d'amortissement lors d'une expansion du système de suspension de roue avant et la force d'amortissement lors d'une contraction du système de suspension de roue arrière lorsque la vitesse d'ouverture du papillon des gaz du moteur de véhicule est supérieure ou égale à un premier seuil ; et
définir le premier seuil en fonction de la vitesse de véhicule, la vitesse de véhicule étant supérieure ou égale à zéro.

**28.** Procédé de commande du système de suspension de roue avant et du système de suspension de roue arrière d'un véhicule, le procédé comprenant les étapes consistant à :

augmenter une ou les deux parmi la force d'amortissement lors d'une contraction du système de suspension de roue avant et la force d'amortissement lors d'une expansion du système de suspension de roue arrière lorsque la vitesse d'obturation du papillon des gaz du moteur de véhicule est supérieure ou égale à un troisième seuil ; et
définir le troisième seuil en fonction de la vitesse de véhicule, la vitesse de véhicule étant supérieure ou égale à zéro.

**Figure 1**

**Figure 2**

**Figure 3**

**Figure 4**

160, 190

| Stroke sensor |

100

| Stroke speed calculation module | → | Standard damping force setting module | → | Damping force determination module |

101    102    111

| Threshold comparison module | | Additional damping force setting module |

112    109    110

50

| Throttle angle sensor |

| Throttle speed change calculation module |

69

| Vehicle speed sensor |

105    106

| Damping force map selection module | ← | Damping force map storage module |

150

| Front wheel side suspension system |

107

| Angle threshold setting module |

180

| Rear wheel side suspension system |

108

| Opening/shutting speed threshold setting module |

EP 1 930 233 B1

32

**Figure 5**

Squat suppression
processing

Throttle angle input — S110

Vehicle speed input — S120

Stroke amount input — S130

Opening speed
calculation — S140

Stroke speed
calculation — S150

Standard damping force
setting — S160

Opening speed
threshold setting — S170

Angle threshold setting — S180

1

**Figure 6**

**Figure 7**

**Figure 8**

EP 1 930 233 B1

Opening speed threshold setting table (a1 < a2 < a3)

| Vehicle speed (km/h) | 0~30 | 30~100 | 100~ |
|---|---|---|---|
| Opening speed threshold | a1 | a2 | a3 |

**Figure 9**

EP 1 930 233 B1

Opening speed threshold setting table (b1<b2<b3)

| Vehicle speed (km/h) | 0~30 | 30~100 | 100~ |
|---|---|---|---|
| *Angle threshold* | b1 | b2 | b3 |

**Figure 10**

Figure 11

```
        ┌─────────────────────┐
        │  Diving suppression │
        │     processing      │
        └─────────────────────┘
                   │
                   ▼
        ┌─────────────────────┐        S410
        │  Throttle angle input │
        └─────────────────────┘
                   │
                   ▼
        ┌─────────────────────┐        S420
        │  Vehicle speed input │
        └─────────────────────┘
                   │
                   ▼
        ┌─────────────────────┐        S430
        │  Stroke amount input │
        └─────────────────────┘
                   │
                   ▼
        ┌─────────────────────┐        S440
        │   Shutting speed    │
        │    calculation      │
        └─────────────────────┘
                   │
                   ▼
        ┌─────────────────────┐        S450
        │    Stroke speed     │
        │    calculation      │
        └─────────────────────┘
                   │
                   ▼
        ┌─────────────────────┐        S460
        │  Standard damping   │
        │   force setting     │
        └─────────────────────┘
                   │
                   ▼
        ┌─────────────────────┐        S470
        │   Shutting speed    │
        │  threshold setting  │
        └─────────────────────┘
                   │
                   ▼
                 ┌───┐
                 │ 2 │
                 └───┘
```

Figure 12

```
              ┌─┐
              │2│
              └─┘
                │
                │                                    S490
                ▼
          ╱─────────────────────╲         NO
         ╱  Shutting speed ≧ shutting ╲ ─────────────────┐
         ╲   speed threshold?      ╱                     │
          ╲─────────────────────╱                        │
                │                                         │
              YES                                         │
                │              S510                       │
                ▼                                         │
        ┌───────────────────────┐                        │
        │ Second damping force map │                      │
        │ selection              │                        │
        └───────────────────────┘                        │
                │              S520                       │
                ▼                                         │
        ┌───────────────────────┐                        │
        │ Additional damping force │                      │
        │ setting                │                        │
        └───────────────────────┘                        │
                │                         S530            │      S540
                ▼                                         ▼
  ┌──────────────────────────────────────────┐  ┌───────────────────┐
  │ Final damping force determination         │  │ Final damping     │
  │ (= standard damping force + additional damping │ force determina- │
  │ force (D3, D4) + fixed damping force (DC)) │  │ tion (= standard  │
  │                                           │  │ damping force)    │
  └──────────────────────────────────────────┘  └───────────────────┘
                │                                         │
                │◄────────────────────────────────────────┘
                ▼              S550
        ┌───────────────────────┐
        │ Suspension control     │
        └───────────────────────┘
                │
                ▼
          ╭───────────╮
          │   End     │
          ╰───────────╯
```

**Figure 13**

Figure 14

Shutting speed threshold setting table ($c1 < c2 < c3$)

| Vehicle speed (km/h) | 0~30 | 30~100 | 100~ |
|---|---|---|---|
| Shutting speed threshold | c1 | c2 | c3 |

Figure 15

EP 1 930 233 B1

Third additional damping force
(front wheel contraction side).

Fourth additional damping force
(rear wheel expansion side).

**Figure 16**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI214206 B
- EP 1391332 A
- US 20020138186 A